# EUROPÄISCHE PATENTSCHRIFT

(11) **EP 2 601 050 B1**
(45) Veröffentlichungstag und Bekanntmachung des Hinweises auf die Patenterteilung: **08.03.2017**
(21) Anmeldenummer: 11760994.1
(22) Anmeldetag: 04.08.2011
(51) Int. Cl.: B32B 38/04, B65D 5/74, B32B 3/10

(54) **VON EINER ROLLE GEFORMTER BEHÄLTER MIT VERBESSERTEN ÖFFNUNGSEIGENSCHAFTEN DURCH STRECKWÄRMEBEHANDLUNG VON POLYMERSCHICHTEN**
CONTAINER FORMED FROM A ROLL AND HAVING IMPROVED OPENING PROPERTIES AS A RESULT OF STRETCHING HEAT TREATMENT OF POLYMER LAYERS
RÉCIPIENT AUX PROPRIÉTÉS D'OUVERTURE AMÉLIORÉES, FORMÉ AU MOYEN D'UN ROULEAU, PAR TRAITEMENT THERMIQUE D'ÉTIRAGE DE COUCHES POLYMÈRES

(30) Priorität: 05.08.2010 DE 102010033465
(43) Veröffentlichungstag der Anmeldung: 12.06.2013
(73) Patentinhaber: SIG Technology AG, 8212 Neuhausen (CH)
(72) Erfinder: WOLTERS, Michael, 52525 Heinsberg (DE); LORENZ, Günther, 52531 Übach-Palenberg (DE); SCHMIDT, Holger, 52459 Inden-Lamersdorf (DE); BISCHOFF, Jörg, 41836 Hückelhoven (DE)
(74) Vertreter: Herzog, Fiesser & Partner Patentanwälte PartG mbB
(86) Internationale Anmeldenummer: PCT/EP2011/003922
(87) Internationale Veröffentlichungsnummer: WO 2012/016705

(56) Entgegenhaltungen:
- EP-A1- 0 575 703
- WO-A1-98/14317

## Beschreibung

Die vorliegende Erfindung betrifft allgemein ein Verfahren zur Herstellung eines einen Behälterinnenraum von der Umgebung abgrenzenden Behälters, welcher zumindest teilweise aus einem flächenförmigen Verbund gebildet ist, beinhaltend die Verfahrensschritte
(I) Bereitstellen eines flächenförmigen Verbunds auf einer Rolle;
(II) Bilden des Behälters aus dem flächenförmigen Verbund von der Rolle;
(III) Verschließen des Behälters.

Seit langer Zeit erfolgt die Konservierung von Nahrungsmitteln, seien es Nahrungsmittel für den menschlichen Verzehr oder auch Tiernahrungsprodukte, in dem diese entweder in einer Dose oder in einem mit einem Deckel verschlossenen Glas gelagert werden. Hierbei kann die Haltbarkeit beispielsweise dadurch erhöht werden, indem jeweils das Nahrungsmittel und der Behälter, hier Glas bzw. Dose, getrennt möglichst weitestgehend entkeimt werden und dann das Nahrungsmittel in den Behälter gefüllt und dieser verschlossen wird. Diese an sich über eine lange Zeit bewährte Maßnahme zur Erhöhung der Haltbarkeit von Nahrungsmitteln hat jedoch eine Reihe von Nachteilen, beispielsweise eine nochmals notwendige nachgelagerte Entkeimung.

Weiterhin haben Dosen und Gläser aufgrund ihrer im Wesentlichen zylindrischen Form den Nachteil, dass eine sehr dichte und platzsparende Lagerung nicht möglich ist. Zudem haben Dosen und Gläser ein erhebliches Eigengewicht, das zu einem erhöhten Energieaufwand beim Transport führt. Außerdem ist zur Herstellung von Glas, Weißblech oder Aluminium, selbst wenn die hierzu verwendeten Rohstoffe aus dem Recycling stammen, ein recht hoher Energieaufwand notwendig. Bei Gläsern kommt erschwerend ein erhöhter Transportaufwand hinzu, da diese meist in einer Glashütte vorgefertigt werden, und dann unter Nutzen erheblicher Transportvolumina zu dem das Nahrungsmittel abfüllenden Betrieb transportiert werden müssen. Darüber hinaus lassen sich Gläser und Dosen nur mit einem erheblichen Kraftaufwand oder unter Zuhilfenahme von Werkzeugen und damit eher umständlich öffnen. Bei Dosen kommt eine hohe Verletzungsgefahr durch scharfe, beim Öffnen entstehende Kanten hinzu. Bei Gläsern kommt es immer wieder dazu, dass beim Füllen oder Öffnen der gefüllten Gläser Glassplitter in das Nahrungsmittel gelangen, die schlimmstenfalls zu inneren Verletzungen beim Verzehr des Nahrungsmittels führen können.

Andere Verpackungssysteme sind aus dem Stand der Technik bekannt, um Nahrungsmittel über einen langen Zeitraum möglichst ohne Beeinträchtigungen zu lagern. Hierbei handelt es sich um aus flächenförmigen Verbunden - häufig auch als Laminat bezeichnet - hergestellte Behälter. Derartige flächenförmige Verbunde sind häufig aufgebaut aus einer thermoplastischen Kunststoffschicht, einer meist aus Karton oder Papier bestehenden Trägerschicht, einer Haftvermittlerschicht, einer Barriereschicht und einer weiteren Kunststoffschicht, wie unter anderem in WO 90/09926 A2 offenbart.

Diese Laminatbehälter weisen bereits viele Vorteile gegenüber den herkömmlichen Gläsern und Dosen auf. Gleichwohl bestehen Verbesserungsmöglichkeiten auch bei diesen Verpackungssystemen.

So sind Laminatbehälter häufig dadurch gekennzeichnet, dass sie zur besseren Öffenbarkeit Trinkhalmlöcher oder Perforationen aufweisen. Die werden dadurch hergestellt, dass beispielsweise in dem zur Herstellung des Laminates eingesetzten Karton Löcher eingebracht werden, über welche dann die weiteren Laminatschichten unter Bildung von den Lochbereich überdeckenden Lochdeckschichten laminiert werden. Dieser Lochbereich kann dann mit einer Verschlussvorrichtung versehen werden, welche bei Betätigung die Lochdeckschichten in den Behälter hineindrückt oder nach oben hin herausreißt. Gegebenenfalls kann auch einfach ein Trinkhalm in einen derartigen Lochbereich hineingedrückt werden. Derartige Lochbereiche sind beispielsweise aus der EP-A-1 570 660 oder der EP-A-1 570 661 bekannt. Neben derartigen beispielsweise als Trinkhalmloch ausgebildeten Lochbereichen können Laminatbehälter auch mit Perforationen versehen sein, welche eine Öffnung des Behälters durch teilweises Aufreißen des Laminats entlang der Perforation ermöglichen. Derartige Perforationen können beispielsweise mittels Laserstrahlen im fertigen Laminat angebracht werden, indem der Laserstrahl punktuell die Polymeraußenschicht und die Trägerschicht unter Bildung einer Vielzahl von Löchern entfernt.

Der Nachteil der bisher aus dem Stand der Technik bekannten Laminatbehälter, welche derartige Lochbereiche aufweisen, liegt jedoch insbesondere darin, dass beim Öffnen der Behälter, sei es durch Betätigung einer Verschlussvorrichtung, durch das Einführen eines Trinkhalms oder das Aufreißen entlang einer Perforation, die den Lochbereich überdeckenden Lochdeckschichten, welche üblicherweise mindestens die Barriereschicht sowie die unterhalb, also in Richtung des abgefüllten Lebensmittels angeordneten Schichten, welche auf der Barriereschicht auflaminiert sind, umfasst, nur unzureichend vom übrigen Laminat abgetrennt werden kann. Häufig kommt es hier zu einer Fadenbildung der thermoplastischen Polymerschichten. EP-A-1 570 660 oder der EP-A-1 570 661 versuchen nun diese Nachteile über die Auswahl bestimmter Polymere, nämlich von mittels Metallocenen hergestelltem Polyolefin zu beheben. Weiter stellen die EP 0 575 703 A1, WO 98/14317 A1, DE 60034175 T2 und die WO 2004/089628 A1 Stand der Technik der vorliegenden Erfindung dar.

Allgemein liegt die Aufgabe der vorliegenden Erfindung darin, die sich aus dem Stand der Technik ergebenden Nachteile zumindest teilweise zu beseitigen.

Eine erfindungsgemäße Aufgabe bestand darin, ein Verfahren zu schaffen, mit dem sich bei hohen Fertigungsgeschwindigkeiten des flächenförmigen Verbunds nicht nur wenige bestimmte Polymere sondern eine Reihe von Polymeren einsetzen lassen und dennoch ein gutes Öffnungs- und Ausgießverhalten erreicht wird.

Zudem besteht eine erfindungsgemäße Aufgabe darin, einen flächenförmigen Verbund mit einem Verfahren zu dessen Herstellung für einen Behälter mit hoher Dichtigkeit bereitzustellen, wobei der flächenförmige Verbund mit hoher Geschwindigkeit gefertigt werden kann.

Weiterhin liegt eine erfindungsgemäße Aufgabe darin, einen flächenförmigen Verbund mit einem Verfahren zu dessen Herstellung für einen Behälter mit guten Öffnungseigenschaften, sei es durch zu öffnende Verschlüsse oder Perforationen, bereitzustellen. Auch hier kommt es bei der Herstellung des Verbundes auf eine hohe Geschwindigkeit an.

Im Zusammenhang mit dem Öffnungsverhalten soll insbesondere das Entstehen von Kunststofffäden vermieden werden. Derartige Fäden werden beispielsweise beim Öffnen von Perforationen beobachtet. Insbesondere bei flüssigkeitshaltigen Behälterfüllungen führt dieses häufig zu einem unerwünschten Anhaften der Flüssigkeiten an diesen Fäden, was zu einem unscharfen Ausgießen mit Nachlaufen führt. Außerdem können sich über die Öffnung stegartig spannende Fäden dazu führen, dass das Nahrungsmittel durch diese aufgestaut wird.

Die Lösung der genannten Aufgabe erfolgt gemäss dem Wortlaut des Anspruches 1.

Anspruch 1 zeigt ein Verfahren zur Herstellung eines einen Behälterinnenraum von der Umgebung abgrenzenden Behälters zumindest teilweise gebildet aus einem flächenförmigen Verbund, beinhaltend die Verfahrensschritte:
(I) Bereitstellen eines flächenförmigen Verbunds auf einer Rolle;
(II) Bilden des Behälters aus dem flächenförmigen Verbund von der Rolle;
(III) Verschließen des Behälters;
wobei der flächenförmige Verbund als Verbundbestandteile beinhaltet:
- eine der Umgebung zugewandte Polymeraußenschicht;
- eine auf die Polymeraußenschicht zum Behälterinnenraum hin folgende Trägerschicht;
- eine auf die Trägerschicht zum Behälterinnenraum hin folgende Barriereschicht;
- eine auf die Barriereschicht zum Behälterinnenraum hin folgende Haftschicht;
- eine auf die Haftschicht zum Behälterinnenraum hin folgende Polymerinnenschicht;
wobei der flächenförmige Verbund auf einer Rolle erhältlich ist durch ein Verfahren, beinhalten die Verfahrensschritte
a. Bereitstellen eines mindestens die Trägerschicht aufweisenden Verbundvorläufers;
b. Aufbringen der Haftschicht und der Polymerinnenschicht durch Schichtextrusion;
c. Aufrollen des flächenförmigen Verbundes auf der Rolle;
wobei mindestens die Polymerinnenschicht oder mindestens die Haftschicht oder mindestens beide während des Aufbringens, insbesondere in Verfahrensschritt b., gestreckt werden,
wobei die Trägerschicht ein Loch aufweist, das mindestens mit der Barriereschicht, der Haftschicht und der Polymerinnenschicht als Lochdeckschichten überdeckt ist, und
wobei mindestens eine der ein gestrecktes Polymer beinhaltenden Lochdeckschichten thermisch behandelt wird.

Im Verfahrensschritt (I) des erfindungsgemäßen Verfahrens wird zunächst ein flächenförmiger Verbund auf einer Rolle bereitgestellt, der als Verbundbestandteile
- eine der Umgebung zugewandte Polymeraußenschicht;
- eine auf die Polymeraußenschicht zum Behälterinnenraum hin folgende Trägerschicht;
- eine auf die Trägerschicht zum Behälterinnenraum hin folgende Barriereschicht;
- eine auf die Barriereschicht zum Behälterinnenraum hin folgende Haftschicht;
- eine auf die Haftschicht zum Behälterinnenraum hin folgende Polymerinnenschicht;
beinhaltet.

Die Formulierung *"auf eine Schicht X zum Behälterinnenraum hin folgende weitere Schicht Y",* wie sie vorstehend verwendet wird, soll ausdrücken, dass sich die Schicht Y näher am Innenraum befindet als die Schicht X. Diese Formulierung besagt nicht zwingend, dass die Schicht Y unmittelbar auf die Schicht X folgt sondern schließt vielmehr auch eine Konstellation ein, bei der sich zwischen der Schicht X und der Schicht Y eine oder mehrere weitere Schichten befinden. Gemäß einer besonderen Ausgestaltung des erfindungsgemäßen Verfahrens ist jedoch der flächenförmige Verbund dadurch gekennzeichnet, dass zumindest die Trägerschicht unmittelbar auf die Polymeraußenschicht, die Haftschicht unmittelbar auf die Barriereschicht und die Polymerinnenschicht unmittelbar auf die Haftschicht folgt.

Der erfindungsgemäße Behälter weist vorzugsweise mindestens eine, bevorzugt zwischen 6 und 16 Kanten, besonders bevorzugt zwischen 7 und 12 oder auch mehr Kanten auf. Als Kante werden erfindungsgemäß insbesondere Bereiche verstanden, die beim Falten einer Fläche durch das Übereinanderlegen von zwei Teilen dieser Fläche entstehen. Als beispielhafte Kanten seien die länglichen Berührungsbereiche von jeweils zwei Wandflächen eines im Wesentlichen quaderförmigen Behälters genannt. Ein solcher quaderförmiger Behälter hat in der Regel 12 Kanten. In dem Behälter stellen die Behälterwände vorzugsweise die von den Kanten eingerahmten Flächen des Behälters dar. Die Behälterwände eines erfindungsgemäßen Behälters sind vorzugsweise zu mindestens 50, bevorzugt zu mindestens 70 und darüber hinaus bevorzugt zu mindestens 90% ihrer Fläche aus einer Trägerschicht als Teil des flächenförmigen Verbunds ausgebildet.

Als Polymeraußenschicht, welche üblicherweise eine Schichtdicke in einem Bereich von 5 bis 25 µm, besonders bevorzugt in einem Bereich von 8 bis 20 µm und am meisten bevorzugt in einem Bereich von 10 bis 18 µm aufweist, kommen insbesondere thermoplastische Kunststoffe in Betracht. In diesem Zusammenhang bevorzugte thermoplastische Kunststoffe sind insbesondere solche mit einer Schmelztemperatur in einem Bereich von 80 bis 155°C, vorzugsweise in einem Bereich von 90 bis 145°C und besonders bevorzugt in einem Bereich von 95 bis 135°C.

Gegebenenfalls kann die Polymeraußenschicht neben dem thermoplastischen Polymer auch einen anorganischen Füllstoff beinhalten. Als anorganischer Füllstoff kommen alle dem Fachmann geeignet erscheinenden, vorzugsweise teilchenförmige Feststoffe in Betracht, die unter anderem zu einer verbesserter Wärmeverteilung in dem Kunststoff und damit zu einer besseren Siegelbarkeit des Kunststoffs führen. Vorzugsweise liegen die durch Siebanalyse bestimmten mittleren Teilchengrößen (d50%) der anorganischen Feststoffe in einem Bereich von 0,1 bis 10 µm, vorzugsweise in einem Bereich von 0,5 bis 5 µm und besonders bevorzugt in einem Bereich von 1 bis 3 µm. Als anorganische Feststoffe kommen vorzugsweise Metallsalze oder Oxide von zwei- bis vierwertigen Metallen in Betracht. Beispielsweise sind hier die Sulfate oder Carbonate des Calciums, Bariums oder Magnesiums oder Titandioxid, vorzugsweise Calciumcarbonat, zu nennen.

In diesem Zusammenhang ist es jedoch bevorzugt, dass die Polymeraußenschicht zu mindestens 60 Vol.-%, vorzugsweise mindestens 80 Vol.-% und besonders bevorzugt mindestens 95 Vol.-%, jeweils bezogen auf die Polymeraußenschicht, ein thermoplastisches Polymer beinhaltet.

Als thermoplastische Polymere der Polymeraußenschicht eignen sich durch Kettenpolymerisation erhaltene Polymere, insbesondere Polyolefine, wobei cyclische Olefincopolymere (COC), polycyclische Olefin-copolymere (POC), insbesondere Polyethylen und Polypropylen, hierunter bevorzugt sind und Polyethylen besonders bevorzugt ist. Die mittels DIN 1133 (190°C/2,16kg) ermittelten Schmelzflussraten (MFR - *melt flow rate*) der auch als Mischung von mindestens zwei einsetzbaren thermoplastischen Polymeren liegt vorzugsweise in einem Bereich von 1 bis 25 g/10 min, vorzugsweise in einem Bereich von 2 bis 9 g/10 min und besonders bevorzugt in einem Bereich von 3,5 bis 8 g/10 min.

Unter den Polyethlylenen sind HDPE, MDPE, LDPE, LLDPE und PE sowie Mischungen aus mindestens zwei davon für das erfindungsgemäße Verfahren bevorzugt. Die mittels DIN 1133 (190°C/2,16kg) ermittelten MFR dieser Polymere liegen vorzugsweise in einem Bereich von 3 bis 15 g/10 min, vorzugsweise in einem Bereich von 3 bis 9 g/10 min und besonders bevorzugt in einem Bereich von 3,5 bis 8 g/10 min. Im Zusammenhang mit der Polymeraußenschicht ist es bevorzugt, Polyethylene mit einer Dichte (gemäß ISO 1183-1:2004) in einem Bereich von 0,912 bis 0,950 g/cm³, einem MFR in einem Bereich von 2,5 bis 8 g/10min und einer Schmelztemperatur (gemäß ISO 11357) in einem Bereich von 96 bis 135°C einzusetzen. Weitere im Zusammenhang mit der Polymeraußenschicht bevorzugte Polyethylene besitzen vorzugsweise eine Dichte (gemäß ISO 1183-1:2004) in einem Bereich von 0,900 bis 0,960 g/cm³.

Gegebenenfalls kann/können auf der zur Umgebung hin zugewandten Seite der Polymeraußenschicht noch eine weitere Schicht bzw. weitere Schichten vorgesehen sein. Insbesondere kann auf der zur Umgebung hin zugewandten Seite der Polymeraußenschicht noch eine Druckschicht aufgetragen sein.

Als auf die Polymeraußenschicht zum Behälterinnenraum hin folgende Trägerschicht kann jedes dem Fachmann für diesen Zweck geeignete Material eingesetzt werden, welches eine ausreichende Festigkeit und Steifigkeit aufweist, um den Behälter soweit Stabilität zu geben, dass der Behälter im gefüllten Zustand seine Form im Wesentlichen beibehält. Neben einer Reihe von Kunststoffen sind auf Pflanzen basierende Faserstoffe, insbesondere Zellstoffe, vorzugsweise verleimte, gebleichte und/oder ungebleichte Zellstoffe bevorzugt, wobei Papier und Karton besonders bevorzugt sind. Das Flächengewicht der Trägerschicht liegt vorzugsweise in einem Bereich von 140 bis 450 g/m², besonders bevorzugt in einem Bereich von 160 bis 400 g/m² und am meisten bevorzugt in einem Bereich von 170 bis 350 g/m².

Als auf die Trägerschicht zum Behälterinnenraum hin folgende Barriereschicht kann jedes dem Fachmann für diesen Zweck geeignete Material eingesetzt werden, welches eine ausreichende Barrierewirkung insbesondere gegenüber Sauerstoff aufweist. Bei der Barriereschicht kann es sich um eine Metallfolie, wie etwa eine Aluminiumfolie, um eine metallisierte Folie oder aber um eine Kunststoffbarriereschicht handeln.

Im Falle einer Kunststoffbarriereschicht beinhaltet diese vorzugsweise mindestens 70 Gew.-%, besonders bevorzugt mindestens 80 Gew.-% und am meisten bevorzugt mindestens 95 Gew.-% mindestens eines Kunststoffs, der dem Fachmann für diesen Zweck insbesondere wegen für Verpackungsbehälter geeigneter Aroma- bzw. Gasbarriereeigenschaften bekannt ist. Vorzugsweise werden hier thermoplastische Kunststoffe eingesetzt. In dem erfindungsgemäßen Behälter kann es sich als vorteilhaft erweisen, wenn die Kunststoffbarriereschicht eine Schmelztemperatur (gemäß ISO 11357) in einem Bereich von mehr als 155 bis 300°C, vorzugsweise in einem Bereich von 160 bis 280°C und besonders bevorzugt in einem Bereich von 170 bis 270°C besitzt. Als Kunststoffe, insbesondere thermoplastische Kunststoffe, kommen hier N oder O tragenden Kunststoffe sowohl für sich als auch in Mischungen aus zwei oder mehr in Betracht. Im Falle einer Kunststoffbarriereschicht ist es weiterhin bevorzugt, dass diese möglichst homogen ist und daher vorzugsweise aus Schmelzen, wie sie beispielsweise durch Extrusion, insbesondere Schichtextrusion, entstehen, erhalten werden kann. Hingegen sind Kunststoffbarriereschichten, die durch Abscheidung aus einer Lösung oder Dispersion von Kunststoffen erhältlich sind, weniger bevorzugt, da diese, insbesondere, wenn eine Abscheidung oder Bildung aus einer Kunststoffdispersion erfolgt, oft mindestens teilpartikuläre Strukturen aufweisen, die im Vergleich zu aus Schmelzen erhältlichen Kunststoffbarriereschichten weniger gute Gas- und Feuchtigkeitsbarriereeigenschaften zeigen.

Als geeignete Polymere, auf denen die Kunststoffbarriereschichten basieren können, kommen insbesondere Polyamid (PA) oder Polyethylenvinylalkohol (EVOH) oder einer Mischung daraus in Betracht.

Als PA kommen alle dem Fachmann für die Herstellung von und dem Einsatz in den erfindungsgemäßen Behältern geeignet erscheinenden PAs in Betracht. Besonders sind hier PA 6, PA 6.6, PA 6.10, PA 6.12, PA 11 oder PA 12 oder eine Mischung aus mindestens zwei davon zu nennen, wobei PA 6 und PA 6.6 besonders bevorzugt sind und PA 6 ferner bevorzugt ist. PA 6 ist unter den Handelsnamen Akulon^{®}, Durethan^{®} und Ultramid^{®} kommerziell erhältlich. Darüber hinaus geeignet sind amorphe Polyamide wie z.B. MXD6, Grivory^{®} sowie Selar^{®}. Das Molekulargewicht des PA sollte vorzugsweise so ausgewählt werden, dass der gewählte Molekulargewichtsbereich zum einen eine gute Schichtextrusion bei der Herstellung des flächigen Verbunds für den Behälter ermöglicht und der flächige Verbund zum anderen ausreichend gute mechanische Eigenschaften, wie eine hohe Bruchdehnung, eine hohe Abriebfestigkeit und eine ausreichende Steifigkeit für den Behälter selbst besitzt. Hieraus ergeben sich bevorzugte als Gewichtsmittel über Gelpermeationschromatographie (GPC) (gemäß ISO/DIS 16014-3:2003) mit Lichtstreuung (ISO/DIS 16014-5:2003) bestimmte Molekulargewichte in einem Bereich von 3×10³ bis 1×10⁷ g/mol, vorzugsweise in einem Bereich von 5×10³ bis 1×10⁶ g/mol und besonders bevorzugt in einem Bereich von 6x10³ bis 1×10⁵ g/mol. Zudem ist es im Zusammenhang mit den Verarbeitungs- und mechanischen Eigenschaften bevorzugt, dass das PA eine Dichte (gemäß ISO 1183-1:2004) in einem Bereich von 1,01 bis 1,40 g/cm³, vorzugsweise in einem Bereich von 1,05 bis 1,3 g/cm³ und besonders bevorzugt in einem Bereich von 1,08 bis 1,25 g/cm³ aufweist. Weiterhin ist es bevorzugt, dass das PA eine Viskositätszahl in einem Bereich von 130 bis 185 ml/g und vorzugsweise in einem Bereich von 140 bis 180, bestimmt nach ISO 307 in 95% Schwefelsäure, hat.

Als EVOH können alle Polymere eingesetzt werden, welche dem Durchschnittsfachmann als für die Herstellung und Verwendung eines erfindungsgemäßen Behälters geeignet erscheinen. Beispiele geeigneter EVOHs sind unter anderem unter den Handelsnamen EVALTM der EVAL Europe NV, Belgien in einer Vielzahl unterschiedlicher Ausführungen kommerziell erhältlich. Besonders geeignet erscheinen die Sorten EVALTM F104B, EVALTM LR101B oder EVALTM LR171B.

Geeignete EVOH Sorten zeichnen sich durch mindestens eine, besonders bevorzugt durch alle der folgenden Eigenschaften aus:
- ein Ethylengehalt in einem Bereich von 20 bis 60 mol %, bevorzugt 25 bis 45 mol%
- eine Dichte (gemäß ISO 1183-1:2004) in einem Bereich von 1,0 bis 1,4 g/cm³, bevorzugt zwischen 1,1 bis 1,3 g/cm³.
- einen Schmelzpunkt (gemäß ISO11357) in einem Bereich von 115 bis 235°C, bevorzugt zwischen 165 bis 225°C
- ein MFR-Wert (gemäß ISO 1133: 210°C/2,16kg bei einer Schmelztemperatur des EVOH kleiner 230°C und 230°C/2,16kg bei einer Schmelztemperatur des EVOH in einem Bereich zwischen 210 bis 230°C) in einem Bereich von 1 bis 20 g/10min, bevorzugt 2 bis 15 g/10min
- eine Sauerstoffpermeationsrate (gemäß ISO 14663-2 Anhang C bei 20°C und 65 % relativer Luftfeuchte) in einem Bereich von 0,05 bis 3,2 cm³×20µm/m²×Tag×atm, bevorzugt zwischen 0,1 bis 0,6 cm³×20µm/m²×Tag×atm.

Im Falle eines Einsatzes von Polyamid als Kunststoffbarriereschicht ist es bevorzugt, dass die Polyamidschicht ein Flächengewicht in einem Bereich von 2 bis 120 g/m², vorzugsweise in einem Bereich von 3 bis 75 g/m² und besonders bevorzugt in einem Bereich von 5 bis 55 g/m² besitzt. Weiterhin ist es in diesem Zusammenhang bevorzugt, dass die Kunststoffbarriereschicht eine Dicke in einem Bereich von 2 bis 90 µm, vorzugsweise ein Bereich von 3 bis 68 µm und besonders bevorzugt in einem Bereich von 4 bis 50 µm hat.

Ferner gilt, dass im Falle von EVOH als Kunststoffbarriereschicht mindestens einer, vorzugsweise mindestens alle der zuvor für Polyamid aufgeführten Parameter hinsichtlich des Flächengewichtes und der Schichtdicke erfüllt sind.

Erfindungsgemäß bevorzugt als Barriereschicht ist jedoch der Einsatz einer Aluminiumfolie, welche vorteilhafterweise eine Dicke in einem Bereich von 3,5 bis 20 µm, besonders bevorzugt in einem Bereich von 4 bis 12 µm und ganz besonders bevorzugt in einem Bereich von 5 bis 9 µm aufweist.

Wird eine Aluminiumfolie als Barriereschicht eingesetzt, so ist es erfindungsgemäß weiterhin bevorzugt, wenn die Aluminiumfolie über eine Laminierungsschicht an die Trägerschicht gebunden ist. In diesem Fall ist also zwischen der Barriereschicht und der Trägerschicht mit der Laminierungsschicht eine weitere Schicht vorgesehen.

Als Laminierungsschicht, welche üblicherweise eine Schichtdicke in einem Bereich von 8 bis 50 µm, besonders bevorzugt in einem Bereich von 10 bis 40 µm und am meisten bevorzugt in einem Bereich von 15 bis 30 µm aufweist, kommen ebenso wie bei der Polymeraußenschicht insbesondere thermoplastische Kunststoffe in Betracht. In diesem Zusammenhang bevorzugte thermoplastische Kunststoffe sind wiederum solche mit einer Schmelztemperatur (gemäß ISO 11357) in einem Bereich von 80 bis 155°C, vorzugsweise in einem Bereich von 90 bis 145°C und besonders bevorzugt in einem Bereich von 95 bis 135°C. Geeignete thermoplastische Polymere für die Laminierungsschicht sind insbesondere Polyethylen oder Polypropylen, wobei der Einsatz von Polyethylen besonders bevorzugt ist. Auch hier kann als Polyethylen HDPE, MDPE, LDPE, LLDPE, PE oder eine Mischung aus mindestens zwei davon eingesetzt werden. Die mittels DIN 1133 (190°C/2,16kg) ermittelten MFR der für die Laminierungsschicht einsetzbaren Polymere liegen vorzugsweise in einem Bereich von 3 bis 15 g/10 min, vorzugsweise in einem Bereich von 3 bis 9 g/10 min und besonders bevorzugt in einem Bereich von 3,5 bis 8 g/10 min. Im Zusammenhang mit der Laminierungsschicht ist es bevorzugt mit einer Dichte (gemäß ISO 1183-1:2004) in einem Bereich von 0,912 bis 0,950 g/cm³, einem MFR in einem Bereich von 2,5 bis 8 g/10min und einer Schmelztemperatur in einem Bereich von 96 bis 135°C einzusetzen. Weitere im Zusammenhang mit der Laminierungsschicht bevorzugte Polyethylene besitzen vorzugsweise eine Dichte (gemäß ISO 1183-1:2004) in einem Bereich von 0,900 bis 0,960 g/cm³.

Weiterhin kann im Falle einer Aluminiumfolie als Barriereschicht und dem Einsatz der vorstehend beschriebenen Laminierungsschicht zwischen der Barriereschicht und der Trägerschicht auch eine Haftvermittlerschicht zwischen der Aluminiumfolie und der Laminierungsschicht, zwischen der Laminierungsschicht und der Trägerschicht oder zwischen der Laminierungsschicht und der Barriereschicht und der Laminierungsschicht und der Trägerschicht vorgesehen sein. Als Haftvermittler kommen alle Polymere in Betracht, die mittels geeigneter funktioneller Gruppen in der Lage sind, durch das Ausbilden von Ionenbindungen oder kovalenten Bindungen zu der Oberfläche der jeweils anderen Schicht eine feste Verbindung zu erzeugen. Vorzugsweise handelt es sich um funktionalisierte Polyolefine, die durch Co-Polymerisation von Ethylen mit Acrylsäuren wie Acrylsäure, Methacrylsäure, Crotonsäure, Acrylaten, Acrylatderivaten oder Doppelbindungen tragenden Carbonsäureanhydriden, beispielsweise Maleinsäureanhydrid, oder mindestens zwei davon, erhalten wurden. Hierunter sind Polyethylenmaleinsäureanhydrid-Pfropfpolymere besonders bevorzugt, die beispielsweise unter der Handelsbezeichnung Bynel^{®} durch DuPont vertrieben werden.

Gemäß einer besonderes Ausgestaltung des nach dem Verfahren gemäß Anspruch 1 hergestellten Behälters ist allerdings weder zwischen der vorzugsweise auf Polyethylen basierenden Laminierungsschicht und der Aluminiumfolie noch zwischen der vorzugsweise auf Polyethylen basierenden Laminierungsschicht und der Trägerschicht, vorzugsweise der Kartonschicht, eine Haftvermittlerschicht vorgesehen.

Die auf die Barriereschicht zum Behälterinnenraum hin folgende Haftschicht basiert ebenso wie die vorstehend beschriebene Haftvermittlerschicht vorzugsweise auf Polymeren, die mittels geeigneter funktioneller Gruppen in der Lage sind, durch das Ausbilden von Ionenbindungen oder kovalenten Bindungen zu der Oberfläche der jeweils anderen Schicht, insbesondere zu der Oberfläche der Aluminiumfolie, eine feste Verbindung, besonders bevorzugt eine chemische Bindung zu erzeugen. Vorzugsweise handelt es sich um funktionalisierte Polyolefine, die durch Co-Polymerisation von Ethylen mit Acrylsäure, Acrylaten, Acrylatderivaten oder Doppelbindungen tragenden Carbonsäureanhydriden, beispielsweise Maleinsäureanhydrid, oder mindestens zwei davon, erhalten wurden. Hierunter sind Polyethylenmaleinsäureanhydrid--Pfropfpolymere und Ethylen-Acrylsäure-Copolymere besonders bevorzugt, wobei Ethylen-Acrylsäure-Copolymere ganz besonders bevorzugt sind. Derartige Copolymere werden beispielsweise unter der Handelsbezeichnung Nucrel^{®} durch DuPont oder unter der Handelsbezeichnung Escor^{®} von Exxon Mobile Chemicals vertrieben.

Die auf die Haftschicht zum Behälterinnenraum hin folgende Polymerinnenschicht basiert ebenso wie die eingangs beschriebene Polymeraußenschicht auf thermoplastischen Polymeren, wobei die Polymerinnenschicht ebenso wie die Polymeraußenschicht einen teilchenförmigen anorganischen Feststoff beinhalten kann. Bevorzugt ist es jedoch, dass die Polymerinnenschicht zu mindestens 70 Gew.-%, vorzugsweise mindestens 80 Gew.-% und besonders bevorzugt mindestens 95 Gew.-%, jeweils bezogen auf die Polymerinnenschicht, ein thermoplastisches Polymer beinhaltet.

In diesem Zusammenhang besonders bevorzugt ist es, dass die Polymerinnenschicht mindestens 70 Gew.-%, besonders bevorzugt mindestens 75 Gew.-% und am meisten bevorzugt mindestens 80 Gew.-%, jeweils bezogen auf die Polymerinnenschicht, eines mittels eines Metallocen-Katalysators hergestellten Polyolefins, vorzugsweise eines mittels eines Metallocen-Katalysators hergestellten Polyethylens (mPE), beinhaltet.

Erfindungsgemäß besonders bevorzugt ist es, dass die Polymerinnenschicht eine Mischung aus einem mittels eines Metallocen-Katalysators hergestelltem Polyolefin und einem weiteren Mischungspolymer ist, wobei es sich bei dem weiteren Mischungspolymer vorzugsweise um nicht mittels eines Metallocen-Katalysators hergestelltes Polyethylen, vorzugsweise um nicht mittels eines Metallocen-Katalysators hergestelltes LDPE handelt. Vorzugsweise handelt es sich bei der Polymerinnenschicht um eine Mischung aus 70 bis 95 Gew.-%, besonders bevorzugt 75 bis 85 Gew.-% mPE und 5 bis 30 Gew.-%, besonders bevorzugt 15 bis 25 Gew.-% LDPE.

Vorzugsweise weist das Polymer bzw. die Polymermischung der Polymerinnenschicht eine Dichte (gemäß ISO 1183-1:2004) in einem Bereich von 0,900 bis 0,930 g/cm³, besonders bevorzugt in einem Bereich von 0,900 bis 0,920 g/cm³ und am meisten bevorzugt in einem Bereich von 0,900 bis 0,910 g/cm³ auf, während die MFR (ISO 1133, 190°C/2,16kg) vorzugsweise in einem Bereich von 4 bis 17 g/10 min, besonders bevorzugt in einem Bereich von 4,5 bis 14 g/10 min und am meisten bevorzugt in einem Bereich von 6,5 bis 10 g/10 min liegt.

Gemäß einer besonders bevorzugten Ausgestaltung des nach dem Verfahren gemäß Anspruch 1 hergestellten Behälters folgt die Polymerinnenschicht unmittelbar auf die Haftschicht. Zwischen der vorzugsweise mPE beinhaltenden Polymerinnenschicht und der Haftschicht ist demnach keine weitere Schicht, insbesondere keine weitere auf Polyethylen basierende Schicht, ganz besonders bevorzugt keine weitere LDPE- oder HDPE-Schicht vorgesehen.

Gemäß einer besonderen Ausgestaltung des erfindungsgemäßen Verfahrens ist im flächenförmigen Verbund die Schichtdicke der Haftschicht SD_{HS} größer als die Schichtdicke der Polymerinnenschicht SD_{PIS}. Besonders bevorzugt ist es dabei, dass die Schichtdicke der Haftschicht SD_{HS} um einen Faktor in einem Bereich von 1,1 bis 5, noch mehr bevorzugt in einem Bereich von 1,2 bis 4 und am meisten bevorzugt in einem Bereich von 1,3 bis 3,5 größer ist als die Schichtdicke der Polymerinnenschicht SD_{PIS}.

Die Gesamtdicke der Haftschicht und der Polymerinnenschicht liegt häufig im Bereich von 10 bis 120 µm, vorzugsweise in einem Bereich von 15 bis 80 µm und besonders bevorzugt in einem Bereich von 18 bis 60 µm. Die bevorzugten Schichtdicken der einzelnen beiden Schichten ergeben sich aus den obenstehenden Faktoren.

Der flächenförmige Verbund wird im erfindungsgemäßen Verfahren auf einer Rolle bereitgestellt.

Um die Öffenbarkeit des durch das erfindungsgemäße Verfahren hergestellten Behälters zu erleichtern, weist die Trägerschicht mindestens ein Loch auf, das mindestens mit der Barriereschicht, der Haftschicht und der Polymerinnenschicht als Lochdeckschichten überdeckt ist.

Gemäß einer ersten besonderen Ausgestaltung des erfindungsgemäßen Verfahrens ist es bevorzugt, dass die Trägerschicht ein Loch aufweist, das mindestens mit der Polymeraußenschicht, der Barriereschicht, der Haftschicht und der Polymerinnenschicht als Lochdeckschichten überdeckt ist. Eine solche Ausgestaltung eines Verbundes ist beispielsweise in der EP-A-1 507 660 und der EP-A-1 507 661 beschrieben, wobei dort jedoch zwischen der Polymerinnenschicht und der Haftschicht eine weitere, vorzugsweise auf LDPE basierende Schicht vorgesehen ist.

Im Zusammenhang mit dieser ersten besonderen Ausgestaltung des erfindungsgemäßen Verfahrens kann das in der Trägerschicht vorgesehene Loch jede dem Fachmann bekannte und für verschieden Verschlüsse oder Trinkhalme geeignete Form haben. Häufig weist das Loch in der Aufsicht Rundungen auf. So kann das Loch im Wesentlichen kreisrund, oval, ellipsen- oder tropfenförmig sein. Mit der Form des Lochs in der Trägerschicht wird meist auch die Form der Öffnung, die entweder durch einen mit dem Behälter verbundenen öffenbaren Verschluss, durch den der Behälterinhalt nach dem Öffnen aus dem Behälter entfernt wird, oder durch einen Trinkhalm in dem Behälter erzeugt wird, vorbestimmt. Damit haben die Öffnungen des geöffneten Behälters häufig Formen, die mit dem Loch in der Trägerschicht vergleichbar oder sogar gleich sind.

Im Zusammenhang mit dem Überdecken des Lochs der Trägerschicht ist es im Zusammenhang mit der ersten besonderen Ausgestaltung des erfindungsgemäßen Verfahrens bevorzugt, dass die Lochdeckschichten mindestens teilweise, vorzugsweise zu mindestens 30%, bevorzugt mindestens 70% und besonders bevorzugt zu mindestens 90% der durch das Loch gebildeten Fläche miteinander verbunden sind. Bevorzugt ist ferner, dass die Lochdeckschichten in dem Bereich der das Loch umschließenden Lochkanten miteinander verbunden sind und vorzugsweise verbunden an der Lochkante anliegen, um so über eine sich über die gesamte Lochfläche erstreckende Verbindung eine verbesserte Dichtigkeit zu erzielen. Häufig sind die Lochdeckschichten über den durch das Loch in der Trägerschicht gebildeten Bereich miteinander verbunden. Dieses führt zu einer guten Dichtigkeit des aus dem Verbund gebildeten Behälters und damit zu der gewünschten hohen Haltbarkeit der in dem Behälter aufbewahrten Lebensmittel.

Meist wird die Öffnung des Behälters durch mindestens teilweises Zerstören der das Loch überdeckenden Lochdeckschichten erzeugt. Dieses Zerstören kann durch Schneiden, Eindrücken in den Behälter oder Herausziehen aus dem Behälter erfolgen. Das Zerstören und somit das Öffnen kann durch ein mit dem Behälter verbundenen und im Bereich des Lochs, meist oberhalb des Lochs angeordneten, die Lochdeckschichten perforierenden Verschluss oder einen Trinkhalm, der durch die das Loch bedeckenden Lochdeckschichten gestoßen wird, erfolgen.

Gemäß einer zweiten besonderen Ausgestaltung des erfindungsgemäßen Verfahrens ist es bevorzugt, dass die Trägerschicht eine Vielzahl von Löchern in Form einer Perforation aufweist, wobei die einzelnen Löcher mindestens mit der Barriereschicht, der Haftschicht und der Polymerinnenschicht als Lochdeckschichten überdeckt sind. Der Behälter kann dann durch Aufreißen entlang der Perforation geöffnet werden. Grundsätzlich können die Löcher in der Trägerschicht, die vorzugsweise auch alle über der Trägerschicht in Richtung der Umgebung liegenden Schichten (Polymeraußenschicht und gegebenenfalls Druckschicht) erstrecken, jede dem Fachmann zur Ausgestaltung eines zu öffnenden Bereichs in dem erfindungsgemäßen Behälter geeignet erscheinende Form aufweisen. Bevorzugt sind jedoch in der Aufsicht kreisförmige oder längliche Löcher, die vorzugsweise entlang einer Linie verlaufen, die eine Perforation in einer Behälterwand des erfindungsgemäßen Behälters ausbildet. Derartige Perforationen werden bevorzugt mittels eines Lasers erzeugt, der die vormals in dem Loch befindlichen Schichten entfernt. Es ist ferner möglich, dass die Perforation insgesamt als eine linienförmige Schwächung des flächenförmigen Verbunds ausgebildet ist, die im Bereich der Schwächung Gruppen von Abschnitten mit einer im Vergleich zu der Schwächung geringeren Schichtdicke aufweist. Diese Perforationen werden bevorzugt durch mechanische, meist Klingen aufweisende, Perforationswerkzeuge erhalten. Insbesondere wird hierdurch erreicht, dass sich der durch das erfindungsgemäße Verfahren hergestellte Behälter ohne übermäßigen Kraftaufwand oder gar der Zuhilfenahme eines Werkzeugs bei geringerer Verletzungsgefahr öffnen lassen kann, in dem die Behälterwand des erfindungsgemäßen Behälters entlang der so gebildeten Perforation aufgerissen wird.

Sowohl bei der ersten als auch bei der zweiten besonderen Ausgestaltung kann es vorgesehen sein, dass zu der Umgebung des Behälters hin keine Polymeraußenschicht bzw. Druckschicht im Bereich des oder der Löcher vorgesehen ist. Vielmehr ist es bei dieser Variante der beiden Ausgestaltungen bevorzugt, dass die Barriereschicht ohne eine weitere Kunststoffschicht wie die Polymeraußenschicht mit der Umgebung in Kontakt steht. Dieses wird vorzugsweise durch Ritzen, Schneiden oder Stanzen oder einer Kombination aus mindestens zwei dieser Maßnahmen der von der Barriereschicht zur Umgebung hin weisenden Schichten bewerkstelligt. Hierbei ist es bevorzugt, dass mindestens eine dieser Maßnahmen durch einen Laser erfolgt. Besonders bevorzugt ist der Einsatz von Laserstrahlen, wenn eine Metallfolie oder eine metallisieret Folie als Barriereschicht eingesetzt wird. So lassen sich insbesondere Perforationen zum leichten Aufreißen des Behälters erzeugen.

In dem erfindungsgemäßen Verfahren ist es ferner bevorzugt, dass der Behälter vor dem Verschließen mit einem Nahrungsmittel gefüllt wird.

Das Füllen kann grundsätzlich auf jede dem Fachmann geläufige und für diesen Zweck geeignete Verfahrensweise erfolgen. Zum einen kann das Nahrungsmittel und der Behälter getrennt vor dem Füllen durch geeignete Maßnahmen wie der Behandlung des Behälters mit H₂O₂ oder UV-Strahlung oder anderer geeigneter energiereicher Strahlung oder Plasmabehandlung oder einer Kombination aus mindestens zwei davon und dem Erhitzen des Nahrungsmittels möglichst weitestgehend entkeimt werden. Diese Art des Füllens wird häufig als "aseptisches Füllen" bezeichnet und ist erfindungsgemäß bevorzugt. Es ist ferner zusätzlich oder auch anstelle der aseptischen Füllung weit verbreitet, dass der mit Nahrungsmittel gefüllte und verschlossene Behälter zum Verringern der Keimzahl erhitzt wird. Dieses erfolgt vorzugsweise durch Autoklavieren. Bei dieser Vorgehensweise können auch weniger sterile Nahrungsmittel und Behälter eingesetzt werden.

Erhältlich ist der im ersten Verfahrensschritt des erfindungsgemäßen Verfahrens bereitgestellte flächenförmige Verbund auf einer Rolle durch ein Verfahren beinhaltend die Verfahrensschritte
a. Bereitstellen eines mindestens die Trägerschicht aufweisenden Verbundvorläufers;
b. Aufbringen der Haftschicht und der Polymerinnenschicht durch Schmelzbeschichtung, vorzugsweise durch Extrusionsbeschichtung,
c. Aufrollen des flächenförmigen Verbundes auf die Rolle,
wobei mindestens die Polymerinnenschicht oder mindestens die Haftschicht oder beide während des Aufbringens, vorzugsweise in Verfahrensschritt b., vorzugsweise durch Schmelzstrecken gestreckt werden.

Im Verfahrensschritt a. wird zunächst ein mindestens die Trägerschicht aufweisender Verbundvorläufer hergestellt. Vorzugsweise handelt es sich bei diesem Verbundvorläufer um ein Laminat umfassend die Polymeraußenschicht, die Trägerschicht und die Barriereschicht. Sofern es sich bei der Barriereschicht um eine Metallfolie wie eine Aluminiumfolie oder eine metallisierte Folie handelt, umfasst der Verbundvorläufer auch die eingangs beschriebene Laminierungsschicht. Auch kann der Verbundvorläufer gegebenenfalls eine auf die Polymeraußenschicht aufgebrachte Druckschicht umfassen. Im Hinblick auf das Loch in der Trägerschicht gibt es verschiedene Herstellungsmöglichkeiten des erfindungsgemäßen Verbundvorläufers.

Gemäß einer Verfahrensvariante kann eine Trägerschicht vorgelegt werden, welche bereits das Loch aufweist. Auf diese Trägerschicht können dann die weiteren Schichten, insbesondere die Polymeraußenschicht und die Barriereschicht bzw. die Laminierungsschicht dergestalt auflaminiert werden, dass diese Schichten die Löcher mindestens teilweise, vorzugsweise jedoch vollständig überdecken. In dem das Loch überdeckenden Bereich kann dann die Polymeraußenschicht direkt auf die Barriereschicht bzw. die Laminierungsschicht auflaminiert werden, wie dies beispielsweise in der EP-A-1 570 660 oder der EP-A-1 570 661 beschrieben ist.

Gemäß einer anderen Verfahrensweise kann zunächst der Verbundvorläufer unter Einsatz einer noch keine Löcher aufweisenden Trägerschicht hergestellt werden und anschließend können durch Schneiden, durch Laserbehandlung oder durch Stanzen Löcher in die Trägerschicht eingebracht werden, wobei diese Maßnahme gegebenenfalls auch erst nach dem Verfahrensschritt b. durchgeführt werden kann. Insbesondere zur Herstellung einer Perforation ist es bevorzugt, den die Polymeraußenschicht, die Trägerschicht und die Barriereschicht bzw. im Falle des Einsatzes einer Aluminiumfolie den die Polymeraußenschicht, die Trägerschicht, die Laminierungsschicht und die Barriereschicht umfassenden Verbundvorläufer auf der Seite der Polymeraußenschicht mit einem Laser dergestalt zu behandeln, dass eine Vielzahl von die Polymeraußenschicht und die Trägerschicht umfassenden Löchern in Form einer Perforation entstehen.

Im Verfahrensschritt b. des erfindungsgemäßen Verfahrens werden sodann die Haftschicht und die Polymerinnenschicht durch Schmelzbeschichtung, vorzugsweise durch Extrusionsbeschichtung, aufgetragen, wobei die Haftschicht auf die Barriereschicht und die Polymerinnenschicht nachfolgend auf die Haftschicht aufgebracht wird. Dazu wird das die Haftschicht bzw. die Polymerinnenschicht bildende thermoplastische Polymer in einem Extruder geschmolzen und in geschmolzenem Zustand in Form einer flächigen Beschichtung auf den Verbundvorläufer aufgebracht. Die Extrusion kann durch eine Reihe aufeinander folgender einzelner Extruder in Einzelschichten oder auch durch Coextrusion in Mehrfachschichten erfolgen.

Bei der Herstellung des flächenförmigen Verbundes auf einer Rolle wird mindestens die Polymerinnenschicht oder mindestens die Haftschicht oder mindestens beide Schichten während des Aufbringens gestreckt, wobei dieses Strecken vorzugsweise durch Schmelzstrecken, ganz besonders bevorzugt durch monoaxiales Schmelzstrecken erfolgt. Dazu wird die entsprechende Schicht mittels eines Schmelzextruders in geschmolzenem Zustand auf den Verbundvorläufer aufgebracht und die aufgetragene, sich noch in geschmolzenem Zustand befindliche Schicht wird anschließend in vorzugsweise monoaxialer Richtung gestreckt, um eine Orientierung des Polymers in dieser Richtung zu erzielen. Anschließend lässt man die aufgetragene Schicht zum Zwecke der Thermofixierung abkühlen. Werden sowohl die Haftschicht als auch die Polymerinnenschicht gestreckt, so kann dieser Vorgang entsprechend zweimal wiederholt, zunächst mit der Haftschicht und anschließend mit der Polymerinnenschicht. In einer anderen Ausgestaltung kann dieses durch Coextrusion von zwei und mehr Schichten gleichzeitig erfolgen.

In diesem Zusammenhang ist es besonders bevorzugt, dass das Strecken durch mindestens folgende Aufbringschritte erfolgt:
b1. Austreten mindestens der Polymerinnenschicht oder mindestens der Haftschicht oder mindestens beider Schichten als mindestens einen Schmelzefilm über mindestens einen Extruderschlitz mit einer Austrittsgeschwindigkeit Vₐᵤₛ;
b2. Auftragen des mindestens einen Schmelzefilms auf den sich relativ zu dem mindestens einen Extruderschlitz mit einer Bewegungsgeschwindigkeit Vᵥₒᵣ bewegenden Verbundvorläufer;
wobei Vₐᵤₛ < Vᵥₒᵣ ist. Insbesondere bevorzugt ist es, dass Vᵥₒᵣ um einen Faktor im Bereich von 5 bis 200, besonders bevorzugt in einem Bereich von 7 bis 150, darüber hinaus bevorzugt in einem Bereich von 10 bis 50 und am meisten bevorzugt in einem Bereich von 15 bis 35 größer ist als Vₐᵤₛ. Dabei ist es bevorzugt, dass das Vᵥₒᵣ mindestens 100 m/min, besonders bevorzugt mindestens 200 m/min und ganz besonders bevorzug mindestens 350 m/min beträgt, üblicherweise jedoch nicht über 1300 m/min liegt.

Erfindungsgemäß wird demnach das Verstrecken der Haftschicht, der Polymerinnenschicht oder dieser beiden Schicht dadurch erreicht, dass der Verbundvorläufer, auf den diese Schichten durch Schmelzextrusion aufgetragen werden, relativ zu der Austrittsgeschwindigkeit der Schmelze aus dem Extruder mit einer Geschwindigkeit von dem Extruder wegbewegt wird, die größer ist als die Austrittsgeschwindigkeit der Schmelze, wodurch es zu einer Streckung des Schmelzefilms kommt.

Die Schlitzbreite im Schmelzextruder liegt dabei vorzugsweise in einem Bereich von 0,2 bis 1,5 mm, besonders bevorzugt in einem Bereich von 0,4 bis 1,0 mm, so dass die Austrittsdicke der Schmelze beim Verlassen des Extruderschlitzes vorzugsweise in einem Bereich von 0,2 bis 1,5 mm, besonders bevorzugt in einem Bereich von 0,4 bis 1,0 mm liegt, während die Dicke der auf den Verbundvorläufer aufgetragenen Schmelzeschicht (Haftschicht bzw. Polymerinnenschicht) in einem Bereich von 5 bis 100 µm, besonders bevorzugt in einem Bereich von 7 bis 50 µm liegt. Durch das Strecken kommt es also zu einer signifikanten Verringerung der Schichtdicke der Schmelzeschicht von dem Bereich des Austritts aus dem Schmelzextruder hin zu der auf dem Verbundvorläufer durch Aufgetragen in Kontakt stehenden Schmelzeschicht.

Weiterhin ist es in diesem Zusammenhang bevorzugt, dass die Schmelze beim Austritt aus dem Schmelzextruder eine Temperatur in einem Bereich von 200 bis 360°C, besonders bevorzugt in einem Bereich von 250 bis 320°C aufweist.

Weiterhin ist es bevorzugt, dass das Strecken bei einer aus einer aus Fasern gebildeten Trägerschicht, beispielsweise Papier oder Karton, in Richtung der Faserrichtung erfolgt. Als Faserrichtung wird vorliegend die Richtung verstanden, in der die Trägerschicht die geringste Biegesteifigkeit aufweist. Häufig handelt es sich hierbei um die sogenannte Maschinenrichtung, in der die Trägerschicht, sofern diese Papier oder Karton ist, hergestellt wird. Diese Maßnahme kann zu einem verbesserten Öffnungsverhalten fahren.

Nachdem die Schmelzeschicht auf den Verbundvorläufer mittels des vorstehend beschriebenen Streckverfahrens aufgebracht wurde, lässt man die Schmelzeschicht zum Zwecke der Thermofixierung abkühlen, wobei dieses Abkühlen vorzugsweise durch Abschrecken über den Kontakt mit einer Fläche erfolgt, die auf eine Temperatur in einem Bereich von 5 bis 50°C, besonders bevorzugt in einem Bereich von 10 bis 30°C gehalten wird. Die Dauer dieses in Kontakt bringens des mit dem Schmelzefilm belegten Verbundvorläufers mit der temperierten Fläche liegt vorzugsweise in einem Bereich von 2 bis 0,15 ms, besonders bevorzugt in einem Bereich von 1 bis 0,2 ms..

Auf die vorstehend beschriebene Art und Weise wird ein flächenförmiger Verbund erhalten, bei dem mindestens die Polymerinnenschicht oder mindestens die Haftschicht oder mindestens beide Schichten zu mindestens 50 Gew.-%, besonders bevorzugt zu mindestens 65 Gew.-% und am meisten bevorzugt zu mindestens 80 Gew.-%, jeweils bezogen auf die jeweilige Schicht, ein gestrecktes Polymer beinhaltet.

Im Verfahrensschritt c. wird sodann der im Verfahrensschritt b. erhaltene flächenförmige Verbund auf einer Rolle aufgerollt.

Im Verfahrensschritt (II) des erfindungsgemäßen Verfahrens zur Herstellung eines Behälters wird sodann aus dem im Verfahrensschritt (I) auf einer Rolle bereitgestellten flächenförmigen Verbund ein Behälter gebildet.

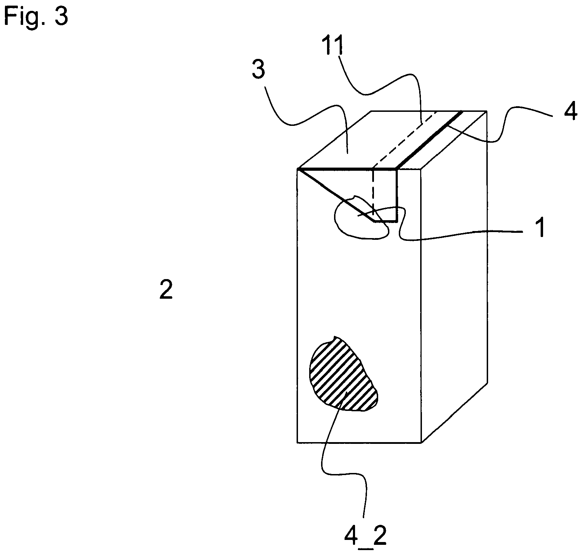

Dazu wird der flächenförmige Verbund vorzugsweise kontinuierlich von der Rolle abgerollt. Aus dem abgerollten Teil des flächenförmigen Verbundes wird sodann vorzugsweise kontinuierlich durch Falten und Siegeln bzw. Kleben der überlappenden Stosskanten ein schlauchförmiges Gebilde mit einer fixierten Längsnaht geformt wird. Dieses schlauchartige Gebilde wird lateral zusammengedrückt, fixiert und getrennt und zu einem offenen Behälter durch Faltformen und Siegeln bzw. Kleben gebildet. Hierbei kann das Nahrungsmittel bereits nach dem Fixieren und vor dem Trennen und Faltformen des Bodens eingefüllt werden. Dieses kann beispielsweise auf einer in WO 2010/023859 in Figur 3 beschriebenen Vorrichtung erfolgen.

Unter "Falten" wird dabei erfindungsgemäß ein Vorgang verstanden, bei dem vorzugsweise mittels einer Faltkante eines Faltwerkzeugs ein länglicher, einen Winkel bildender Knick in dem gefalteten flächenförmigen Verbund erzeugt wird. Hierzu werden häufig zwei aneinandergrenzende Flächen eines flächenförmigen Verbunds immer mehr auf einander zu gebogen. Durch die Faltung entstehen mindestens zwei aneinandergrenzende Faltflächen, die dann zumindest in Teilbereichen zum Ausbilden eines Behälterbereiches verbunden werden. Erfindungsgemäß kann das Verbinden durch jede dem Fachmann geeignet erscheinende Maßnahme erfolgen, die eine möglichst gas- und flüssigkeitsdichte Verbindung ermöglicht. Das Verbinden kann durch Siegeln oder Kleben oder einer Kombination beider Maßnahmen erfolgen. Im Fall des Siegelns wird die Verbindung mittels einer Flüssigkeit und deren Erstarren geschaffen. Im Fall des Klebens bilden sich zwischen den Grenzflächen oder Oberflächen der beiden zu verbindenden Gegenstände chemische Bindungen aus, die die Verbindung schaffen. Häufig ist es beim Siegeln oder Kleben vorteilhaft, die zu siegelnden bzw. klebenden Flächen miteinander zu verpressen.

Die Siegeltemperatur wird vorzugsweise so ausgewählt, dass der oder die am Siegeln beteiligten Kunststoffe, vorzugsweise die Polymere der Polymeraußenschicht und/oder der Polymerinnenschicht, als Schmelze vorliegen. Zudem sollte die Siegeltemperatur nicht zu hoch gewählt werden, um den oder die Kunststoffe nicht unnötig stark thermisch zu belasten, so dass diese ihre vorgesehen Materialeigenschaften nicht einbüßen. Üblicherweise liegen die Siegeltemperaturen mindestens 1 K, vorzugsweise mindestens 5 K und besonders bevorzugt mindestens 10 K oberhalb der Schmelztemperatur des jeweiligen Kunststoffs.

Im Verfahrensschritt (III) des erfindungsgemäßen Verfahrens wird der Behälter sodann verschlossen, wobei dieses Verschließen ebenfalls vorzugsweise durch Kleben oder Versiegeln erfolgt.

Ein die Verfahrensschritte (II) und (III) des erfindungsgemäßen Verfahrens umfassendes Verfahren, bei dem aus einem auf einer Rolle aufgerollten flächenförmigen Verbund auf die vorstehend beschriebene Art und Weise ein verschlossener Verpackungsbehälter gebildet wird, ist beispielsweise der Figur 3 der WO-A-2010/023859 zu entnehmen.

Vor Durchführung des Verfahrensschrittes (III) kann der Behälter mit einem Nahrungsmittel befüllt werden. Als Nahrungsmittel kommen alle dem Fachmann bekannten Lebensmittel für den menschlichen Verzehr und auch Tierfutter in Betracht. Bevorzugte Nahrungsmittel sind oberhalb 5°C flüssig, beispielsweise Getränke. Bevorzugte Nahrungsmittel sind Milchprodukte, Suppen, Saucen, nichtkohlensäurehaltige Getränke, wie Fruchtgetränke und -säfte oder Tees. Die Nahrungsmittel können zum einen zuvor entkeimt in ebenfalls zuvor entkeimte Behälter gefüllt bzw. mit einem ebenfalls zuvor entkeimten flächenförmigen Verbund umschlossen werden. Zudem können die Nahrungsmittel nach dem Befüllen bzw. Umschließen entkeimt werden. Dieses erfolgt beispielsweise durch Autoklavieren.

Erfindungsgemäß wird nun mindestens einer der ein gestrecktes Polymer beinhaltenden Lochdeckschichten thermisch behandelt. Zweck dieser thermischen Behandlung ist es, eine zumindest teilweise Aufhebung der Orientierung der Polymere in der Haftschicht, in der Polymerinnenschicht oder in beiden Schicht insbesondere im Lochbereich zu bewirken. Diese thermische Behandlung bewirkt eine verbesserte Öffenbarkeit des Behälters. Im Fall von mehreren in Form einer Perforation vorliegenden Löchern in der Trägerschicht ist es insbesondere bevorzugt, diese thermische Behandlung um den Randbereich des Loches herum durchzuführen.

Die thermische Behandlung kann durch elektromagnetische Strahlung, durch Behandlung mit Heißgas, durch einen Feststoffwärmekontakt, durch Ultraschall oder durch eine Kombination von mindestens zwei dieser Maßnahmen erfolgen.

Im Fall des Bestrahlens kommt jede dem Fachmann zum Erweichen der Kunststoffe geeignete Strahlenart in Betracht. Bevorzugte Strahlenarten sind IR-, UV-Strahlen, und Mikrowellen. Bevorzugte Schwingungsarten sind Ultraschall. Im Fall der IR-Strahlen, die auch zum IR-Schweißen von flächenförmigen Verbunden eingesetzt werden, sind Wellenlängenbereiche von 0,7 bis 5 µm zu nennen. Weiterhin können Laserstrahlen in einem Wellenlängenbereich von 0,6 bis kleiner 10,6 µm eingesetzt werden. Im Zusammenhang mit dem Einsatz von IR-Strahlen werden diese durch verschiedene, dem Fachmann bekannte und geeignete Strahler erzeugt. Kurzwellige Strahler im Bereich von 1 bis 1,6 µm sind vorzugsweise Halogenstrahler. Mittelwellige Strahler im Bereich von >1,6 bis 3,5 µm sind beispielsweise Metallfolienstrahler. Als langwellige Strahler im Bereich >3,5 µm werden häufig Quarzstrahler eingesetzt. Immer öfter werden Laser eingesetzt. So werden Diodenlaser in einem Wellenlängenbereich von 0,8 bis 1 µm, Nd : YAG-Laser bei etwa 1 µm und CO₂-Laser bei etwa 10,6 µm eingesetzt. Auch Hochfrequenztechniken mit einem Frequenzbereich von 10 bis 45 MHz, häufig in einem Leistungsbereich von 0,1 bis 100 kW werden eingesetzt.

Im Fall des Ultraschalls sind die nachfolgenden Behandlungsparameter bevorzugt:
- P1: eine Frequenz in einem Bereich von 5 bis 100 kHz, vorzugsweise in einem Bereich von 10 bis 50 kHz und besonders bevorzugt in einem Bereich von 15 bis 40 kHz;
- P2: eine Amplitude im Bereich von 2 bis 100 µm, vorzugweise in einem Bereich von 5 bis 70 µm und besonders bevorzugt in einem Bereich von 10 bis 50 µm;
- P3: eine Schwingzeit (als Zeitraum, in dem ein Schwingungskörper wie eine Sonotrode oder Induktor auf den flächenförmigen Verbund kontaktschwingend wirkt) in einem Bereich von 50 bis 1000 msec, vorzugsweise in einem Bereich von 100 bis 600 msec und besonders bevorzugt in einem Bereich von 150 bis 300 msec.

Bei der geeigneten Auswahl der Strahlungs- bzw. Schwingungsbedingungen ist es vorteilhaft, die Eigenresonanzen der Kunststoffe zu berücksichtigen und Frequenzen nahe dieser auszuwählen.

Ein Erwärmen über einen Kontakt mit einem Feststoff kann beispielsweise durch eine direkt mit dem flächenförmigen Verbund in Kontakt stehenden Heizplatte oder Heizform erfolgen, die die Wärme an den flächenförmigen Verbund abgibt. Heißluft kann durch geeignete Gebläse, Austrittsöffnungen oder Düsen oder einer Kombination daraus auf den flächenförmigen Verbund gerichtet werden. Häufig werden das Kontakterwärmen und das Heißgas gleichzeitig eingesetzt. So kann beispielsweise eine mit Heißgas durchströmte und dadurch aufgeheizte und das Heißgas durch geeignete Öffnungen abgebende Haltevorrichtung für einen aus dem flächenförmigen Verbund geformten Schlauch den flächenförmigen Verbund durch Kontakt mit der Wand der Haltevorrichtung und dem Heißgas erwärmen. Ferner kann das Erwärmen des Schlauchs auch dadurch erfolgen, dass der Schlauch mit einer Schlauchhalterung fixiert und die zu erwärmenden Bereiche des Schlauchs von einer oder zwei und mehr in der Mantelhalterung vorgesehenen Heißgasdüsen angeströmt werden.

Vorzugsweise wird durch die vorstehend beschriebene thermische Behandlung die Haftschicht bzw. die Polymerinnenschicht auf eine Oberflächentemperatur in einem Bereich von 70 bis 260°C, besonders bevorzugt in einem Bereich von 80 bis 220°C erhitzt, um die Orientierung der Polymere in dieser Schicht bzw. in diesen beiden Schichten zumindest teilweise zu vermindern. Die Oberflächentemperatur wird durch den Einsatz einer IR-Messeinrichtung vom Typ LAND Cyclops TI35+ Wärmebildkamera, Abtastsystem mit 8-seitigem Polygonspiegel, 25Hz in einem Messwinkel von zur flach aufliegenden Probe von 45° (einstellbar über Fotostativ) in einem Abstand von dem Objektivring zur Polymerinnenschicht von 240mm und einem Emissionsfaktor 1 ermittelt. Bevorzugt wird die Oberflächentemperatur durch Heißluft mit einer Temperatur im Bereich von 200 bis 500°C und besonders bevorzugt in einem Bereich von 250 bis 400°C jeweils über einen Behandlungszeitraum in einem Bereich von 0,1 bis 5sec und besonders bevorzugt in einem Bereich von 0,5 bis 3sec erzeugt. Dieses ist für die Behandlung von Lochbereichen besonders bevorzugt.

In einer weiteren Ausgestaltung des erfindungsgemäßen Verfahrens ist es bevorzugt, dass die thermische Behandlung durch elektromagnetische Induktion erfolgt. Hierbei ist es bevorzugt, dass der Induktor an der Oberfläche des flächenförmigen Verbunds vorgesehen ist, die in dem daraus gebildeten Behälter der Umgebung zugewandt ist. Im Zusammenhang mit der Behandlung durch elektromagnetische Strahlung, insbesondere durch elektromagnetische Induktion ist es bevorzugt, dass mindestens einer, vorzugsweise jeder der nachfolgenden Betriebsparameter verwirklicht ist:
i. Ausgangspannung in einem Bereich von 30 bis 120 V_{eff} und bevorzugt in einem Bereich von 45 bis 90 V_{eff};
ii. Ausgangsstrom in einem Bereich von 10 bis 70 A und bevorzugt in einem Bereich von 25 bis 50 A;
iii. Ausgangsleistung in einem Bereich von 0,5 bis 10 kW und bevorzugt in einem Bereich von 1 bis 5 kW;
iv. Ausgangsfrequenz in einem Bereich von 10 bis 1000 kHz und bevorzugt in einem Bereich von 50 bis 500 kHz;
v. Abstand zwischen Induktoroberfläche und Verbundoberfläche in einem Bereich von 0,3 bis 3mm und bevorzugt in einem Bereich von 0,5 bis 2mm.

Diese Betriebsbedingungen werden beispielsweise durch einen Indunktionsgenerator und -oszillator des Typ "i-class" der Firma Cobes GmbH, Deutschland erreicht. Ferner wird zur Behandlung bevorzugt ein Linearinduktor erfindungsgemäß eingesetzt. An diesem wird die zu behandelnde Fläche des flächenförmigen Verbunds vorbeibewegt, wobei dieses vorzugsweise mit Geschwindigkeiten von mindestens 50m/Min aber meist nicht mehr als 500m/Min erfolgt. Häufig werden Geschwindigkeiten in einem Bereich von 100 bis 300m/Min erreicht.

In dem erfindungsgemäßen Verfahren ist es weiterhin bevorzugt, dass sich die maximalen Transmissionsintensität mindestens einer der ein gestrecktes Polymer beinhaltenden Lochdeckschichten vor und nach der thermischen Behandlung unterscheiden. Dieses lässt sich üblicherweise durch unterschiedliche Darstellungen des durch einen Polaristaionsfilter betrachteten Bereichs feststellen. So unterscheiden die thermisch behandelten Bereiche sich von den an diesen angrenzenden thermisch nicht behandelten Bereiche auf einer Oberfläche durch Hell-Dunkel-Kontraste. Gleiches gilt für Bereiche vor und nach der thermischen Behandlung. In diesem Zusammenhang weiter bevorzugt ist es, dass die mindestens eine Lochdeckschicht die Polymerinnenschicht ist. Es ist zudem bevorzugt, dass die Barriereschicht eine Metallfolie oder eine metallisierte Kunststoffschicht ist. Über diese ist die in Bereichen thermisch behandelte Polymerschicht, meist die Polymerinnenschicht des später geformten Behälters, vorgesehen, so dass die Barriereschicht durchscheint. Zudem ist allgemein durch die von der thermischen Behandlung herrührende Veränderung der Struktur der Polymerinnenschicht im Vergleich zu den nicht thermisch behandelten ein Glanzunterschied zu erkennen.

Die Bereiche unterschiedlichen Glanzes decken sich mit den thermisch behandelten Bereichen der Oberfläche der Polymerinnenschicht.

Neben den Lochdeckschichten können auch noch weitere Bereiche des flächenförmigen Verbunds thermisch behandelt werden. Auch diese zeigen eine gegenüber den unbehandelten Bereichen verschiedene maximale Transmissionsintensität. Hierunter fallen alle Bereiche, in denen ein Verbinden durch Siegeln erfolgt und/oder Rillungen zum Falten vorgesehen sind. Unter diesen Bereichen sind die Längsnähte, an denen der flächenförmige Verbund zu einem schlauch- oder mantelartigen Gebilde geformt wird, besonders bevorzugt. Im Anschluss an die vorstehende thermische Behandlung kann man die thermisch behandelten Bereiche wieder abkühlen lassen.

Gemäß einer besonderen Ausgestaltung des erfindungsgemäßen Verfahrens wird die thermische Behandlung mindestens einer der ein gestrecktes Polymer beinhaltenden Lochdeckschichten vor dem Verfahrensschritt (II) und somit vor dem Bilden des Behälters auf die vorstehend beschriebene Art und Weise durchgeführt. Insbesondere kann es vorteilhaft sein, die thermische Behandlung noch vor Durchführung des Verfahrensschrittes c., also vor dem Aufrollen des flächenförmigen Verbundes auf die Rolle, durchzuführen.

Nicht beansprucht ist ein flächenförmiger Verbund in Form einer Rolle, als Verbundbestandteile beinhaltend:
- eine Polymeraußenschicht;
- eine auf die Polymeraußenschicht folgende Trägerschicht;
- eine auf die Trägerschicht folgende Barriereschicht;
- eine auf die Barriereschicht folgende Haftschicht;
- eine auf die Haftschicht folgende Polymerinnenschicht;
wobei sich die maximalen Transmissionsintensitäten mindestens zweier Bereiche (B1, B2) der Oberfläche der Polymerinnenschicht unterscheiden.

Vorzugsweise bilden diese Bereiche die Polymerinnenschichten der Lochdeckschichten. Neben den Lochdeckschichten können auch noch weitere Bereiche des flächenförmigen Verbunds thermisch behandelt werden. Bei dem erfindungsgemäßen flächenförmigen Verbund ist es bevorzugt, dass die Polymerinnenschicht in dem einen der mindestens zwei Bereiche (B1, B2) einen im Vergleich zu dem weiteren der mindestens zwei Bereiche (B1, B2) weniger orientierten Kunststoff beinhaltet. Diese zeigen eine gegenüber den unbehandelten Bereichen verschiedene maximale Transmissionsintensität. Hierunter fallen alle Bereiche, in denen ein Verbinden durch Siegeln erfolgt und/oder Rillungen zum Falten vorgesehen sind. Unter diesen Bereichen sind die Längsnähte, an denen der flächenförmige Verbund zu einem schlauch- oder mantelartigen Gebilde geformt wird, besonders bevorzugt. Die Bereiche sind meist streifen- oder bahnartig ausgestaltet. So liegen beispielsweise bei einer aus einer Vielzahl von Löchern gebildeten Perforation die Polymerinnenschichten der Lochdeckschichten der Perforation in einer Bahn. In einer Ausgestaltung ist es somit bevorzugt, dass ausgehend von der Lochkante, ein mindestens 1mm breiter Bereich thermisch behandelt ist. In manchen Fällen, insbesondere im Fall von Perforationen, ist dieser von der Lochkante aus gemessene Bereich bis zu 10mm breit. In einer weiteren Ausgestaltung ist es bevorzugt, dass mindestens 60%, vorzugsweise mindestens 80% der von der Lochkante umfassten Fläche thermisch behandelt ist.

Ferner zeigt die Beschreibung einen Behälter zu mehr als 50 Gew.-%, bezogen auf das Gesamtgewicht des leeren Behälters, gebildet aus einem erfindungsgemäßen flächenförmigen Verbund. Auch hier gelten die vorstehenden Ausführungen zu dem erfindungsgemäßen Behälter, so dass diese hier nicht gesondert wiederholt werden müssen.

### Testmethoden

Sofern nicht anders hierin bestimmt, werden die hierin aufgeführten Größen durch DIN Vorschriften gemessen.

Die maximale Transmissionsintensität wird bestimmt, in dem auf eine zu prüfende Fläche ein Polarisationsfilterfolie IFK-P-W76 der Firma Schneider Optik GmbH gelegt wird. Die Folie wird auf der zu prüfenden Fläche so lange gedreht, bis mit dem maximalen Hell-Dunkel-Kontrast die Unterschiede der maximalen Transmissionsintensität erkennbar sind.

### Figuren

Die vorliegende Erfindung wird nun durch diese nicht einschränkende, beispielhaften Zeichnungen näher erläutert, wobei Figur
1 eine schematische Ansicht eines durch das erfindungsgemäße Verfahren hergestellten Behälters mit einem überdecktem Loch,
2 eine schematische Darstellung eines mit Lochdeckschichten überdeckten Lochs mit einem öffenbaren Verschluss mit Öffnungsmitteln als Teile eines Verschlusssystems,
3 eine schematische Ansicht eines durch das erfindungsgemäße Verfahren hergestellten Behälters mit einer Vielzahl von Löchern in der Trägerschicht in Form einer Perforation,
4 eine schematische Darstellung einer bevorzugten Ausführungsform des zur Herstellung dieses Behälters eingesetzten flächenförmigen Verbundes,
5 eine schematische Darstellung einer weiteren bevorzugten Ausführungsform des zur Herstellung dieses Behälters eingesetzten flächenförmigen Verbundes,
6 eine schematische Darstellung einer Rollenbahn,
7 eine schematische Darstellung eines geeigneten Verfahrens zum Aufbringen der Haftschicht und/oder der Polymerinnenschicht mittels Schmelzstrecken,
8 eine schematische Darstellung eines Verfahrens zur Herstellung einer thermischen Behandlung mittels eines Induktors.

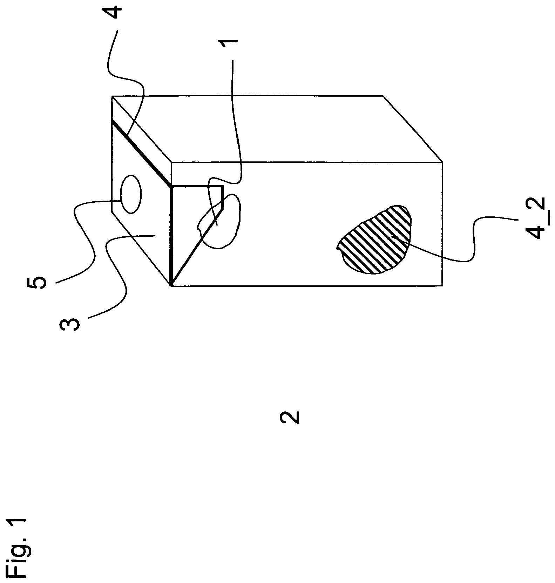

Figur 1 zeigt einen einen Innenraum 1 umschießenden Behälter 3 aus einem flächenförmigen Verbund 4, welcher ein darin eingeschlossenes Nahrungsmittel von der Umgebung 2 trennt. In dem Behälter ist im Kopfbereich ein überdecktes Loch 5 vorgesehen ist, über dem ein öffenbarer Verschluss (nicht gezeigt) vorgesehen werden kann.

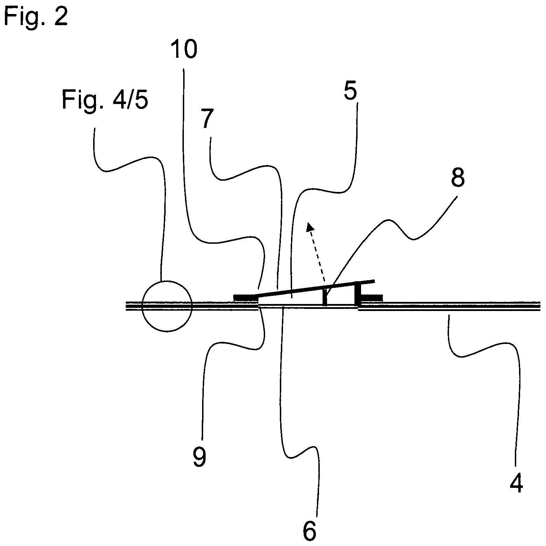

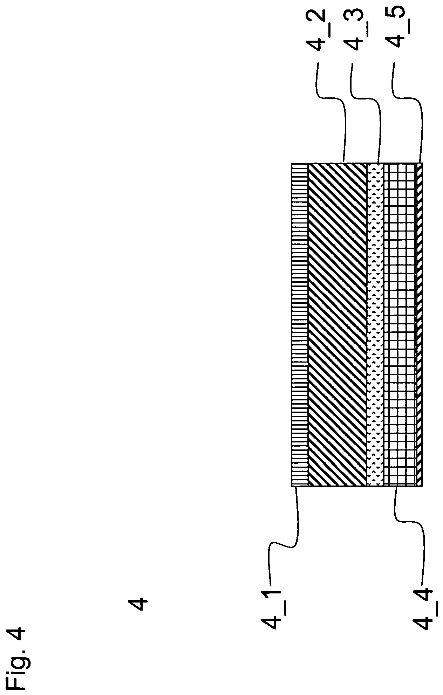

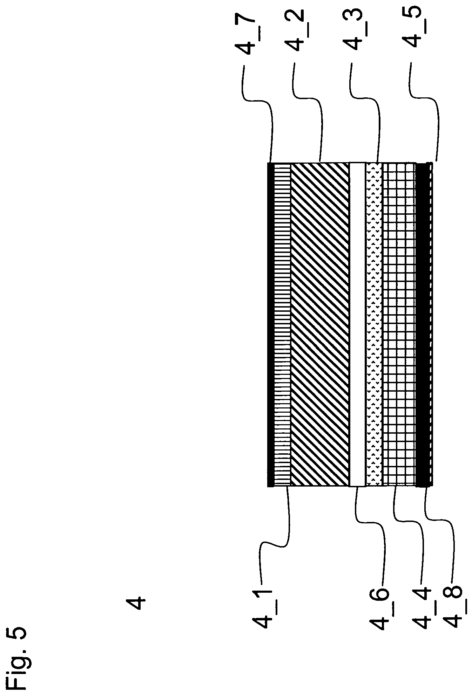

In Figur 2 wird in einer schematischen Querschnittdarstellung ein Ausschnitt des Kopfbereichs eines erfindungsgemäßen Behälters 3 gezeigt. Ein mit den Einzelheiten des Schichtaufbaus in Figur 4 oder 5 dargestellter flächenförmiger Verbund 4 weist ein Loch 5, das über eine Lochkante 9 abgegrenzt ist, auf. In dem Loch 5 befinden sich Lochdeckschichten 6, die mindestens die Barriereschicht 4_3, die Haftschicht 4_4 und die Polymerinnenschicht 4_5 umfassen. Durch das Fehlen der Trägerschicht 4_2 im Bereich des Lochs 5 umschließen die Lochdeckschichten 6 entlang der Lochkante 9 die bis zur Lochkante 9 reichende Trägerschicht 4_2 feuchtigkeitsdicht und überdecken das Loch 5, so dass der Behälter 3 möglichst flüssigkeits- und gasdicht abgeschlossen ist. An der Außenseite des Behälters 3 ist über das Loch 5 überdeckend ein öffenbarer Verschluss 7 vorgesehen. Der Verschluss 7 verfügt über ein Öffnungsmittel 8, das mit den Lochdeckschichten 6 verbunden ist und über ein Gelenk 10 in Richtung des gestrichelten Pfeils schwenkbar ist. Beim Schwenken des Öffnungsmittels 8 in Pfeilrichtung werden die Lochdeckschichten 6 aufgerissen und so der verschlossene Behälter 3 geöffnet.

Figur 3 zeigt eine besondere Ausgestaltung eines durch das erfindungsgemäße Verfahren hergestellten Behälters 3, bei dem im Gegensatz zu dem in Figur 1 gezeigten Behälter 3 auf der Oberseite des Behälters 3 entlang einer Linie 11 eine Vielzahl von Löchern vorgesehen sind, die eine Perforation zum einfachen Öffnen des Behälters 3 bilden.

Figur 4 zeigt den Schichtaufbau des flächenförmigen Verbundes 4, aus dem der Behälter 3 durch Faltformen hergestellt werden kann. Der Verbund 4 umfasst mindestens eine Polymeraußenschicht 4_1, welche nach Bildung des Behälters 3 der Umgebung 2 zugewandt ist. Auf die Polymeraußenschicht 4_1, die vorzugsweise aus einem thermoplastischen Polymer wie Polyethylen oder Polypropylen gebildet ist, folgt eine vorzugsweise auf Papier oder Karton basierende Trägerschicht 4_2, auf die wiederum eine Barriereschicht 4_3 folgt. Auf die Barriereschicht 4_3 folgt die Haftschicht 4_4, auf die schließlich die Polymerinnenschicht 4_5 folgt. Im Behälter 3 steht diese Polymerinnenschicht 4_5 in unmittelbarem Kontakt mit dem Lebensmittel.

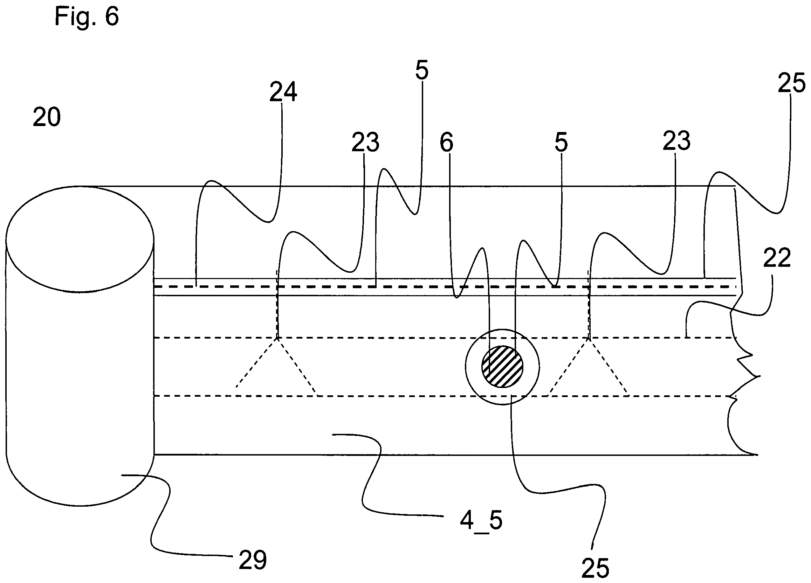

Figur 5 zeigt den bevorzugten Schichtaufbau des flächenförmigen Verbundes 4, aus dem der Behälter 3 durch Faltformen hergestellt werden kann. Der Verbund 4 umfasst zusätzlich zu den in Figur 6 gezeigten Schichten noch eine auf die Polymeraußenschicht 4_1 aufgebrachte Druckschicht 4_7 und eine zwischen der Trägerschicht 4_2 und der Barriereschicht 4_3 vorgesehene Laminierungsschicht 4_6. Diese Laminierungsschicht 4_6, die vorzugsweise auf thermoplastischen Polymeren wie Polyethylen oder Polypropylen basiert, ist insbesondere dann vorgesehen, wenn eine Metallfolie wie beispielsweise Aluminiumfolie als Barriereschicht 4_3 eingesetzt wird. Zudem ist zwischen der Haftschicht 4_4 und der Polymerinnenschicht 4_5 noch eine weitere thermoplastische Schicht 4_8, vorzugsweise aus LLDPE, vorgesehen. In einem weiteren Ausführungsbeispiel ist es bevorzugt, dass die thermoplastische Schicht 4_8 aus LDPE besteht, oder dieses enthält.

Figur 6 zeigt eine schematische Darstellung einer Rollenbahn 20 von einer Rolle 29. Darin sind sich an Rillkreuzen 23 schneidende Rillungen 22 vorgesehen. Weiterhin weist die Rollbahn 20 eine aus einer Vielzahl von überschichteten Löchern 5 gebildete Perforation 24 auf, die in einem die Perforation 24 umgebenden Bereich 25 thermisch aktiviert wurde. Die hier horizontal gezeigte Perforation 24 kann auch in vertikaler Richtung vorgesehen werden. Der thermisch aktivierte Bereich 25 unterscheidet sich in seiner maximalen Transmissionsintensität von den an den Bereich 25 angrenzenden Bereichen der Polymerinnenschicht 4_5. Zudem weist die Rollenbahn 20 eine Loch 5 mit Lochdeckschichten 6 auf, die in einem Bereich 25 thermisch behandelt wurden. Auch hier unterscheidet sich dieser in seiner maximalen Transmissionsintensität von der an den Bereich 25 angrenzenden Bereiche der Polymerinnenschicht 4_5.

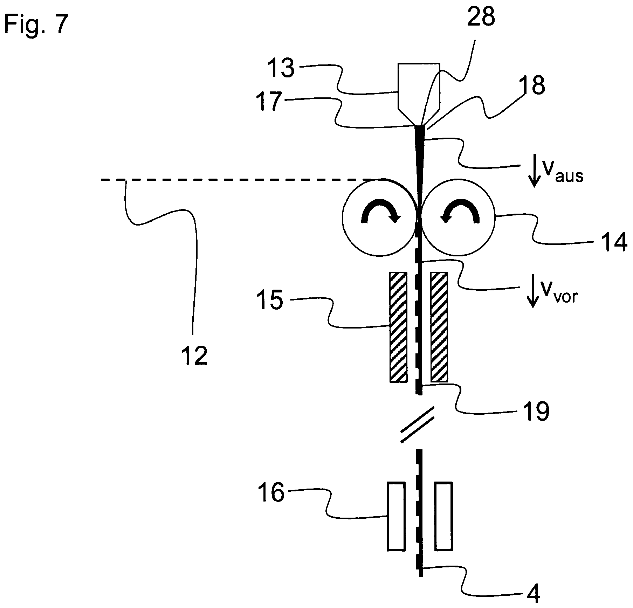

Figur 7 zeigt eine schematische Darstellung des erfindungsgemäßen Verfahrens betreffend das Aufbringen der Haftschicht und/oder der Polymerinnenschicht. Ein Verbundvorläufer 12 wird angetrieben durch ein Walzenpaar 14 kontinuierlich zwischen dieses Walzenpaar 14 hindurch und somit kontinuierlich unter einem Schmelzextruder 13 vorbeigeführt. Aus dem Schmelzextruder 13 wird eine Schmelze desjenigen thermoplastischen Polymers, aus dem die Haftschicht 4_4 bzw. die Polymerinnenschicht 4_5 gebildet wird, mit der Austrittsgeschwindigkeit Vₐᵤₛ aus dem Extruderschlitz 28 mit einer durch die Schlitzbreite 17 bestimmten Austrittsdicke 18 ausgeschieden. Sie gelangt auf die Oberfläche des Verbundvorläufers 12. Handelt es sich bei der Schmelze um die Haftschicht 4_4, so wird diese auf die Seite der Barriereschicht 4_3 des Verbundvorläufers 12, welche der Trägerschicht 4_2 abgewandt ist, mit einer Schichtdicke 19 aufgetragen. Handelt es sich bei der Schmelze um die Polymerinnenschicht 4_5, so wird diese auf die Haftschicht 4_4 aufgetragen. Dadurch, dass sich der Verbundvorläufer 12 relativ zu dem Extruderschlitz 28 mit einer Geschwindigkeit Vᵥₒᵣ bewegt, die größer ist als V_{E}, kommt es beim Auftragen der Haftschicht 4_4 bzw. der Polymerinnenschicht 4_5 zu einem Strecken der Schmelzeschicht in monoaxialer Richtung und mithin zu einer monoaxialen Orientierung der Polymerketten in dieser Schicht. Gezeigt ist in der Figur 7 auch, dass es durch das Strecken zu einer signifikanten Verringerung der Schichtdicke der Schmelzeschicht von dem Bereich des Austritts aus dem Schmelzextruder hin zu der auf dem Verbundvorläufer aufgetragenen Schmelzeschicht kommt.

Nachdem die Haftschicht bzw. die Polymerinnenschicht auf die vorstehend beschriebene Weise in monoaxial gestreckter Form als Schmelzeschicht aufgebracht wurde, kann der so erhaltene Verbund zum Zwecke der Thermofixierung der gestreckten Schmelzeschicht beispielsweise durch einen Kontakt mit einer temperierten Fläche 15 gekühlt werden.

Wenn sowohl die Haftschicht 4_4 als auch die Polymerinnenschicht 4_5 durch das vorstehend beschriebene Verfahren als gestreckte Schmelzeschicht aufgetragen werden sollen, so wird das vorstehend beschriebene Verfahren zunächst mit der Haftschicht 4_4 und danach mit der Polymerinnenschicht 4_5 durchgeführt.

Um zumindest in den das Loch bzw. die Löcher im flächenförmigen Verbund 4 überspannenden Bereichen der Lochdeckschichten 6 die Orientierung der Polymerketten in der Haftschicht 4_4 und/oder der Polymerinnenschicht 4_5 zumindest zu vermindern, kann der Verbund mittels geeigneter Erwärmungsvorrichtungen 16 insbesondere in den Lochbereichen noch erwärmt werden.

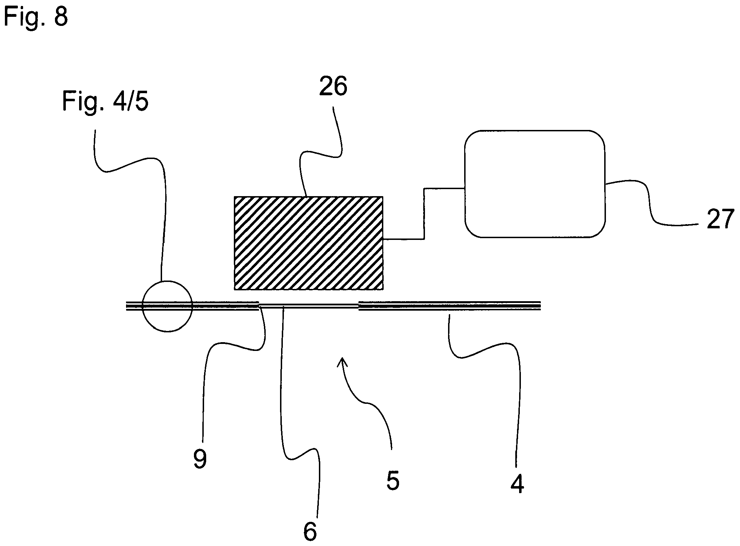

Figur 8 zeigt einen flächenförmigen Verbund 4, der beispielsweise den in den Figuren 4 und 5 dargestellten Aufbau besitzt. Im Bereich des mit den Lochdeckschichten 6 verschlossenen Lochs 5, das von der Lochkante 9 umschlossen wird, ist ein Induktor 26 vorgesehen, der HZ über einen Hochfrequenzgenerator 27 die Lochdeckschicht 6 und einen Randbereich des flächenförmigen Verbunds 4 um die Lochkanten 9 durch elektromagnetische Induktion erwärmt.

### Bezugszeichenliste

- 1: Innenraum
- 2: Umgebung
- 3: Behälter
- 4: flächenförmiger Verbund
4_1 Polymeraußenschicht
4_2 Trägerschicht
4_3 Barriereschicht
4_4 Haftschicht
4_5 Polymerinnenschicht
4_6 Laminierungsschicht
4_7 Druckschicht
4_8 weitere thermoplastische Schicht
- 5: Loch
- 6: Lochdeckschichten
- 7: Verschluss
- 8: Öffnungsmittel
- 9: Lochkante
- 10: Gelenk
- 11: Perforation
- 12: Verbundvorläufer
- 13: Schmelzextruder
- 14: Walzenpaar
- 15: Kühlfläche
- 16: Erwärmungsvorrichtung
- 17: Schlitzbreite
- 18: Austrittsdicke
- 19: Schichtdicke
- 20: Rollenbahn
- 21: Behandlungsbereich
- 22: Rillung
- 23: Rillkreuz
- 24: Perforation
- 25: Thermisch behandelter Bereich
- 26: Induktor
- 27: Hochfrequenzgenerator
- 28: Extruderschlitz
- 29: Rolle

## Patentansprüche

1. Ein Verfahren zur Herstellung eines einen Behälterinnenraum (1) von der Umgebung (2) abgrenzenden Behälters (3) zumindest teilweise gebildet aus einem flächenförmigen Verbund (4), beinhaltend die Verfahrensschritte:
(I) Bereitstellen eines flächenförmigen Verbunds (4) auf einer Rolle (29);
(II) Bilden des Behälters (3) aus dem flächenförmigen Verbund (4) von der Rolle (29);
(III) Verschließen des Behälters (3);
wobei der flächenförmige Verbund (4) als Verbundbestandteile beinhaltet:
- eine der Umgebung (2) zugewandte Polymeraußenschicht (4_1);
- eine auf die Polymeraußenschicht (4_1) zum Behälterinnenraum (1) hin folgende Trägerschicht (4_2);
- eine auf die Trägerschicht (4_2) zum Behälterinnenraum (1) hin folgende Barriereschicht (4_3);
- eine auf die Barriereschicht (4_3) zum Behälterinnenraum (1) hin folgende Haftschicht (4_4);
- eine auf die Haftschicht (4_4) zum Behälterinnenraum (1) hin folgende Polymerinnenschicht (4_5);
wobei der flächenförmige Verbund (4) auf einer Rolle (29) erhältlich ist durch ein Verfahren, beinhalten die Verfahrensschritte
a. Bereitstellen eines mindestens die Trägerschicht (4_2) aufweisenden Verbundvorläufers ;
b. Aufbringen der Haftschicht (4_4) und der Polymerinnenschicht (4_5) durch Schichtextrusion;
d. Aufrollen des flächenförmigen Verbundes auf die Rolle (29);
wobei mindestens die Polymerinnenschicht (4_5) oder mindestens die Haftschicht (4_4) oder mindestens beide während des Aufbringens gestreckt werden,
wobei die Trägerschicht (4_2) ein Loch (5) aufweist, das mindestens mit der Barriereschicht (4_3), der Haftschicht (4_4) und der Polymerinnenschicht (4_5) als Lochdeckschichten (6) überdeckt ist, und
wobei mindestens eine der ein gestrecktes Polymer beinhaltenden Lochdeckschichten thermisch behandelt wird.

2. Verfahren nach Anspruch 1, wobei die thermische Behandlung vor dem Bilden des Behälters (3) gemäß Verfahrensschritt (II) erfolgt.

3. Verfahren nach Anspruch 1 oder 2, wobei die thermische Behandlung durch Heißgas, Ultraschall oder Mikrowellen oder eine Kombination von mindestens zwei davon erfolgt.

4. Verfahren nach einem der Ansprüche 1 bis 3, wobei das Behandeln vor dem Bereitstellen des Verbunds auf einer Rolle gemäß Verfahrensschritt (I) erfolgt.

5. Verfahren nach einem der vorhergehenden Ansprüche, wobei die thermische Behandlung durch elektromagnetische Induktion erfolgt.

6. Verfahren nach einem der vorhergehenden Ansprüche, wobei sich die maximalen Transmissionsintensität mindestens einer der ein gestrecktes Polymer beinhaltenden Lochdeckschichten (6) vor und nach der thermischen Behandlung unterscheiden.

7. Verfahren nach Anspruch 6, wobei die mindestens eine Lochdeckschicht die Polymerinnenschicht (4_5) ist.

8. Verfahren nach einem der vorhergehenden Ansprüche 1 bis 7, wobei das Strecken ein Schmelzstrecken ist.

9. Verfahren nach Anspruch 8, wobei das Strecken durch mindestens folgende Aufbringschritte erfolgt:
b1. Austreten mindestens der Polymerinnenschicht (4_5) oder mindestens der Haftschicht (4_4) oder mindestens beider als mindestens einen Schmelzefilm über mindestens einen Extruderschlitz (28) mit einer Austrittsgeschwindigkeit Vₐᵤₛ;
b2. Auftragen des mindestens einen Schmelzefilms auf den sich relativ zu dem mindestens einen Extruderschlitz (28) mit einer Bewegungsgeschwindigkeit Vᵥₒᵣ bewegenden Verbundvorläufer (12);
wobei Vₐᵤₛ < Vᵥₒᵣ ist.

10. Verfahren nach Anspruch 9, wobei Vᵥₒᵣ um einen Faktor im Bereich von 5 bis 200 größer ist als Vₐᵤₛ.

11. Verfahren nach einem der vorhergehenden Ansprüche, wobei die Trägerschicht (4_2) aus Papier oder Karton besteht.

12. Verfahren nach einem der vorhergehenden Ansprüche, wobei die Barriereschicht (4_3) eine Metallfolie oder eine metallisierte Folie ist.

13. Verfahren nach einem der vorhergehenden Ansprüche, wobei die Haftschicht (4_4) chemische Bindungen mit der Barriereschicht (4_3) ausbildet.

14. Verfahren nach einem der vorhergehenden Ansprüche, wobei das Loch (5) mit einem die Lochdeckschichten (6) beim Öffnen perforierenden Verschluss (10) versehen wird.

15. Verfahren nach einem der vorhergehenden Ansprüche, wobei Behälter (3) vor dem Verschließen mit einem Nahrungsmittel gefüllt wird.

## Claims

1. Method for producing a container (3) that delimits a container interior (1) from the surroundings (2) and is formed at least in part from a sheet-like composite (4), comprising the method steps of:
(I) providing a sheet-like composite (4) on a roller (29);
(II) forming the container (3) from the sheet-like composite (4) from the roller (29);
(III) closing the container (3);
wherein the sheet-like composite (4) comprises as component parts of the composite:
- a polymer outer layer (4_1) facing the surroundings (2);
- a carrier layer (4_2) following the polymer outer layer (4_1) in the direction of the container interior (1);
- a barrier layer (4_3) following the carrier layer (4_2) in the direction of the container interior (1) ;
- an adhesive layer (4_4) following the barrier layer (4_3) in the direction of the container interior (1);
- a polymer inner layer (4_5) following the adhesive layer (4_4) in the direction of the container interior (1);
wherein the sheet-like composite (4) on a roller (29) can be obtained by a method comprising the method steps of:
a. providing a preliminary composite comprising at least the carrier layer (4_2);
b. applying the adhesive layer (4_4) and the polymer inner layer (4_5) by laminating extrusion;
d. rolling the sheet like composite onto the roller (29) ;
wherein at least the polymer inner layer (4_5) or at least the adhesive layer (4_4) or at least both is/are stretched while it/they are being applied,
wherein the carrier layer (4_2) has a hole (5), which is covered at least by the barrier layer (4_3), the adhesive layer (4_4) and the polymer inner layer (4_5) as hole-covering layers (6), and
wherein at least one of the hole-covering layers comprising a stretched polymer is thermally treated.

2. Method according to Claim 1, wherein the thermal treatment is performed before forming of the container (3) according to method step (II).

3. Method according to Claim 1 or 2, wherein the thermal treatment is performed by hot gas, ultrasound or microwaves or a combination of at least two of these.

4. Method according to one of Claims 1 to 3, wherein the treatment is performed before providing the composite on a roller according to method step (I).

5. Method according to one of the preceding claims, wherein the thermal treatment is performed by electromagnetic induction.

6. Method according to one of the preceding claims, wherein the maximum transmission intensity of at least one of the hole-covering layers (6) comprising a stretched polymer differ before and after the thermal treatment.

7. Method according to Claim 6, wherein the at least one hole-covering layer is the polymer inner layer (4_5).

8. Method according to one of the preceding Claims 1 to 7, wherein the stretching is a melt stretching.

9. Method according to Claim 8, wherein the stretching is performed by at least the following application steps:
b1. discharging at least the polymer inner layer (4_5) or at least the adhesive layer (4_4) or at least both as at least one melt film via at least one extruder slot (28) at a discharging speed Vₐᵤₛ; and
b2. applying the at least one melt film to the preliminary composite (12) moving in relation to the at least one extruder slot (28) at a moving speed Vᵥₒᵣ;
where Vₐᵤₛ<Vᵥₒᵣ.

10. Method according to Claim 9, wherein Vᵥₒᵣ is greater than Vₐᵤₛ by a factor in the range of 5 to 200.

11. Method according to one of the preceding claims, wherein the carrier layer (4_2) consists of paper or cardboard.

12. Method according to one of the preceding claims, wherein the barrier layer (4_3) is a metal foil or a metallized film.

13. Method according to one of the preceding claims, wherein the adhesive layer (4_4) forms chemical bonds with the barrier layer (4_3).

14. Method according to one of the preceding claims, wherein the hole (5) is provided with a closure (10) that perforates the hole-covering layers (6) during opening.

15. Method according to one of the preceding claims, wherein the container (3) is filled with a foodstuff before closing.

## Revendications

1. Procédé de fabrication d'un récipient (3) délimitant un espace intérieur de récipient (1) par rapport à l'environnement (2), formé au moins en partie à partir d'un composite de surface (4), contenant les étapes de procédé suivantes :
(I) mise à disposition d'un composite de surface (4) sur un rouleau (29) ;
(II) formation du récipient (3) à partir du composite de surface (4) du rouleau (29) ;
(III) fermeture du récipient (3) ;
le composite de surface (4) contenant les composants de composite suivantes :
- une couche extérieure de polymère (4_1) orientée vers l'environnement (2) ;
- une couche de support (4_2) suivant la couche extérieure de polymère (4_1) en direction de l'espace intérieur de récipient (1) ;
- une couche de barrière (4_3) suivant la couche de support (4_2) en direction de l'espace intérieur de récipient (1) ;
- une couche d'adhérence (4_4) suivant la couche de barrière (4_3) en direction de l'espace intérieur de récipient (1) ;
- une couche intérieure de polymère (4_5) suivant la couche d'adhérence (4_4) en direction de l'espace intérieur de récipient (1) ;
le composite de surface (4) pouvant être obtenu sur un rouleau (29) par le biais d'un procédé, contenant les étapes de procédé suivantes :
a. mise à disposition d'un précurseur de composite comportant au moins la couche de support (4_2) ;
b. application de la couche d'adhérence (4_4) et de la couche intérieure de polymère (4_5) par extrusion de couche ;
d. enroulement du composite de surface sur le rouleau (29) ;
au moins la couche intérieure de polymère (4_5) ou au moins la couche d'adhérence (4_4) ou au moins les deux couches étant étirées pendant l'application ;
la couche de support (4_2) comportant un trou (5) recouvert au moins par la couche de barrière (4_3), la couche d'adhérence (4_4) et la couche intérieure de polymère (4_5) servant de couches de recouvrement de trou (6) ; et
au moins une des couches de recouvrement de trou contenant un polymère étiré étant traitée thermiquement.

2. Procédé selon la revendication 1, le traitement thermique se produisant avant formation du récipient (3) suivant l'étape de procédé (II).

3. Procédé selon la revendication 1 ou 2, le traitement thermique se produisant par application de gaz chauds, d'ultrasons ou de micro-ondes ou une combinaison d'au moins deux de ceux-ci.

4. Procédé selon l'une quelconque des revendications 1 à 3, le traitement avant la mise à disposition du composite sur un rouleau se produisant selon l'étape de procédé (I).

5. Procédé selon l'une quelconque des revendications précédentes, le traitement thermique se produisant par induction électromagnétique.

6. Procédé selon l'une quelconque des revendications précédentes, l'intensité de transmission maximale d'au moins une des couches de recouvrement de trou (6) contenant un polymère étiré se différencient avant et après le traitement thermique.

7. Procédé selon la revendication 6, l'au moins une couche de recouvrement de trou étant la couche intérieure de polymère (4_5).

8. Procédé selon l'une quelconque des revendications précédentes 1 à 7, l'extension étant une extension par fusion.

9. Procédé selon la revendication 8, l'extension se produisant par au moins les étapes d'application suivantes :
b1. sortie d'au moins la couche intérieure de polymère (4_5) ou d'au moins la couche d'adhérence (4_4) ou d'au moins les deux couches sous la forme d'au moins un film en fusion via au moins une fente d'extrudeuse (28) à une vitesse de sortie Vₐᵤₛ ;
b2. application de l'au moins un film en fusion sur le précurseur de composite (12) mobile par rapport à l'au moins une fente d'extrudeuse (28) à une vitesse de déplacement Vvor ;
où Vₐᵤₛ < Vᵥₒᵣ.

10. Procédé selon la revendication 9, Vᵥₒᵣ étant supérieur d'un facteur dans la plage de 5 à 200 par rapport à Vₐᵤₛ.

11. Procédé selon l'une quelconque des revendications précédentes, la couche de support (4_2) étant en papier ou en carton.

12. Procédé selon l'une quelconque des revendications précédentes, la couche de barrière (4_3) étant un film métallique ou un film métallisé.

13. Procédé selon l'une quelconque des revendications précédentes, la couche d'adhérence (4_4) formant des liaisons chimiques avec la couche de barrière (4_3).

14. Procédé selon l'une quelconque des revendications précédentes, le trou (5) étant pourvu d'une fermeture (10) perforant les couches de recouvrement de trou (6) à l'ouverture.

15. Procédé selon l'une quelconque des revendications précédentes, le récipient (3) étant rempli d'un aliment avant la fermeture.
